# EUROPEAN PATENT APPLICATION

(11) **EP 4 770 111 A1**
(43) Date of publication of application: **01.07.2026**
(21) Application number: 24885987.8
(22) Date of filing: 23.08.2024
(51) Int. Cl.: H04N 23/68, H04N 23/54, H04N 23/55, H02N 2/00, H04N 23/57

(54) **CAMERA MODULE INCLUDING PIEZOELECTRIC ACTUATOR**

(30) Priority: 30.10.2023 KR 20230146580; 07.12.2023 KR 20230176350
(71) Applicant: Samsung Electronics Co., Ltd., Suwon-si, Gyeonggi-do 16677 (KR)
(72) Inventor: OH, Jinheon, Suwon-si, Gyeonggi-do 16677 (KR)
(74) Representative: HGF
(86) International application number: PCT/KR2024/012611
(87) International publication number: WO 2025/095307

(57) **Abstract**

This camera module may include a piezoelectric actuator configured to move a lens or an image sensor in a direction substantially orthogonal to the optical axis. The piezoelectric actuator may include a vibrator configured to generate vibration, a moving body configured to move in a direction substantially orthogonal to the optical axis, and a tip configured to press an elastically deformable region of the moving body and to transfer the vibration generated from the vibrator to the elastically deformable region.

## Description

### Technical Field

The disclosure generally relates to a camera module, for example, a camera module including a piezoelectric actuator. The disclosure also relates to an electronic device including a camera module.

### Background Art

Technology for implementing image stabilization is being developed to capture a clear image by considering the fine vibration generated when capturing an image or video. For example, an image without shaking may be obtained by detecting a user's handshake and moving a lens or image sensor.

The above description is information the inventor(s) acquired during the course of conceiving the present disclosure, or already possessed at the time, and is not necessarily art publicly known before the present application is filed.

### DISCLOSURE OF THE INVENTION

### Technical Solutions

In accordance with an aspect of the disclosure, a camera module is provided. The camera module includes a lens having an optical axis (OA), an image sensor configured to receive light passing through the lens, and a first piezoelectric actuator configured to move the lens or the image sensor in a direction that is substantially orthogonal to the OA, wherein the first piezoelectric actuator includes a first vibrator configured to generate a vibration, a second vibrator configured to generate a vibration, a first moving body including a first elastically deformable region and a second elastically deformable region, a first tip configured to press the first elastically deformable region and configured to transmit the vibration generated from the first vibrator to the first elastically deformable region, and a second tip configured to press the second elastically deformable region and configured to transmit the vibration generated from the second vibrator to the second elastically deformable region.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a block diagram illustrating an electronic device in a network environment according to an embodiment of the disclosure;
FIG. 2 is a block diagram illustrating a camera module according to an embodiment of the disclosure;
FIG. 3 is a perspective view of an electronic device in one direction according to an embodiment of the disclosure;
FIG. 4 is a perspective view of an electronic device in another direction according to an embodiment of the disclosure;
FIG. 5 is a perspective view of a camera module according to an embodiment of the disclosure;
FIG. 6 is an exploded perspective view of a camera module according to an embodiment of the disclosure;
FIG. 7 is a cross-sectional view taken along line 7-7 of the camera module of FIG. 5 according to an embodiment of the disclosure;
FIG. 8 is a perspective view of an image sensor and a first piezoelectric actuator according to an embodiment of the disclosure;
FIG. 9 is a perspective view of a first piezoelectric actuator according to an embodiment of the disclosure;
FIG. 10 is a side view of a first piezoelectric actuator according to an embodiment of the disclosure;
FIG. 11 is a plan view of a sensor arrangement structure of a camera module according to an embodiment of the disclosure;
FIG. 12 is a diagram illustrating an image sensor shifting in a first direction that is substantially orthogonal to an optical axis according to an embodiment of the disclosure;
FIG. 13 is a graph illustrating a voltage driving waveform applied to the first piezoelectric actuator of FIG. 12 according to an embodiment of the disclosure;
FIG. 14 is a graph illustrating a voltage driving waveform applied to the first piezoelectric actuator of FIG. 12 according to an embodiment of the disclosure;
FIG. 15 is a diagram illustrating an image sensor shifting in a direction that is opposite to a first direction according to an embodiment of the disclosure;
FIG. 16 is a graph illustrating a voltage driving waveform applied to the first piezoelectric actuator of FIG. 15 according to an embodiment of the disclosure;
FIG. 17 is a diagram illustrating an image sensor shifting in a second direction that is substantially orthogonal to an optical axis and a first direction according to an embodiment of the disclosure;
FIG. 18 is a graph illustrating a voltage driving waveform applied to the first piezoelectric actuator of FIG. 17 according to an embodiment of the disclosure;
FIG. 19 is a graph illustrating a voltage driving waveform applied to the first piezoelectric actuator of FIG. 17 according to an embodiment of the disclosure;
FIG. 20 is a diagram illustrating an image sensor shifting in a direction that is opposite to a second direction according to an embodiment of the disclosure;
FIG. 21 is a graph illustrating a voltage driving waveform applied to the first piezoelectric actuator of FIG. 20 according to an embodiment of the disclosure;
FIG. 22 is a diagram illustrating an image sensor rolling in a first rotational direction with respect to an optical axis according to an embodiment of the disclosure;
FIG. 23 is a graph illustrating a voltage driving waveform applied to the first piezoelectric actuator of FIG. 22 according to an embodiment of the disclosure;
FIG. 24 is a graph illustrating a voltage driving waveform applied to the first piezoelectric actuator of FIG. 22 according to an embodiment of the disclosure;
FIG. 25 is a diagram illustrating an image sensor rolling in a second rotational direction that is opposite to a first rotational direction with respect to an optical axis according to an embodiment of the disclosure;
FIG. 26 is a graph illustrating a voltage driving waveform applied to the first piezoelectric actuator of FIG. 25 according to an embodiment of the disclosure;
FIG. 27 is a graph illustrating a voltage driving waveform applied to the first piezoelectric actuator of FIG. 25 according to an embodiment of the disclosure;
FIG. 28 is a perspective view of an image sensor and a second piezoelectric actuator according to an embodiment of the disclosure;
FIG. 29 is an exploded perspective view of an image sensor and a second piezoelectric actuator according to an embodiment of the disclosure;
FIG. 30 is a plan view of the fifth resonator of FIG. 28 according to an embodiment of the disclosure;
FIG. 31 is a cross-sectional view taken along line 31-31 of the second piezoelectric actuator of FIG. 30 according to an embodiment of the disclosure;
FIG. 32 is a graph illustrating a voltage driving waveform applied to the second piezoelectric actuator of FIG. 28 according to an embodiment of the disclosure;
FIG. 33 is a graph illustrating a voltage driving waveform applied to the second piezoelectric actuator of FIG. 28 according to an embodiment of the disclosure;
FIG. 34 is a graph illustrating a voltage driving waveform applied to the second piezoelectric actuator of FIG. 28 according to an embodiment of the disclosure;
FIG. 35 is a graph illustrating a voltage driving waveform applied to the second piezoelectric actuator of FIG. 28 according to an embodiment of the disclosure;
FIG. 36 is a perspective view of a camera module according to an embodiment of the disclosure;
FIG. 37 is an exploded perspective view of a camera module according to an embodiment of the disclosure;
FIG. 38 is a cross-sectional view taken along line 38-38 of the camera module of FIG. 36 according to an embodiment of the disclosure;
FIG. 39 is a perspective view of a camera module according to an embodiment of the disclosure;
FIG. 40 is an exploded perspective view of a camera module according to an embodiment of the disclosure; and
FIG. 41 is an exploded perspective view illustrating a sensor arrangement structure of a camera module according to an embodiment of the disclosure.

### MODE FOR CARRYING OUT THE INVENTION

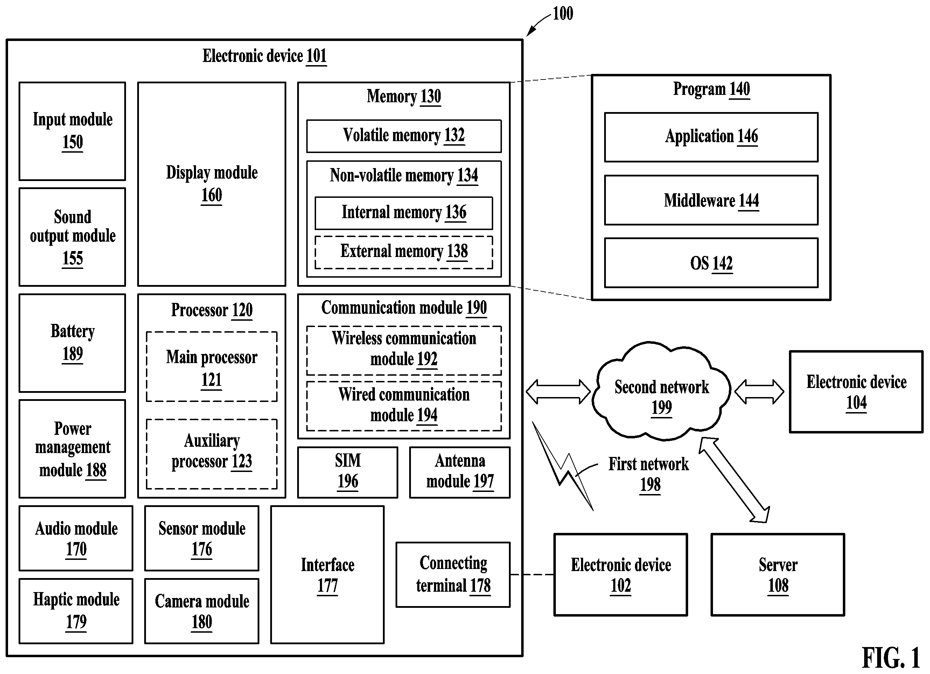

FIG. 1 is a block diagram illustrating an electronic device in a network environment according to an embodiment of the disclosure.

Referring to FIG. 1, an electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). According to an embodiment of the disclosure, the electronic device 101 may communicate with the external electronic device 104 via the server 108. According to an embodiment of the disclosure, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments of the disclosure, at least one of the components (e.g., the connecting terminal 178) may be omitted from the electronic device 101, or one or more other components may be added to the electronic device 101. In some embodiments of the disclosure, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment of the disclosure, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment of the disclosure, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). According to an embodiment of the disclosure, the auxiliary processor 123 (e.g., an ISP or a CP) may be implemented as part of another component (e.g., the camera module 180 or the communication module 190) functionally related to the auxiliary processor 123. According to an embodiment of the disclosure, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment of the disclosure, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment of the disclosure, the display module 160 may include a touch sensor adapted to detect a touch, or a pressure sensor adapted to measure the intensity of force incurred by the touch.

The audio module 170 may convert a sound into an electrical signal and vice versa. According to an embodiment of the disclosure, the audio module 170 may obtain the sound via the input module 150 or output the sound via the sound output module 155 or an external electronic device (e.g., the external electronic device 102) (e.g., a speaker or headphone) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment of the disclosure, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment of the disclosure, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the external electronic device 102). According to an embodiment of the disclosure, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment of the disclosure, the haptic module 179 may include, for example, a motor, a piezoelectric element, or an electric stimulator.

The camera module 180 may capture a still image or moving images. According to an embodiment of the disclosure, the camera module 180 may include one or more lenses, image sensors, ISPs, or flashes.

The power management module 188 may manage power supplied to the electronic device 101. According to an embodiment of the disclosure, the power management module 188 may be implemented as at least part of, for example, a power management integrated circuit (PMIC).

The battery 189 may supply power to at least one component of the electronic device 101. According to an embodiment of the disclosure, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment of the disclosure, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the external electronic device 104), or a network system (e.g., the second network 199). According to an embodiment of the disclosure, the wireless communication module 192 may support a peak data rate (e.g., 20 Gbps or more) for implementing eMBB, loss coverage (e.g., 164 dB or less) for implementing mMTC, or user plane (U-plane) latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment of the disclosure, the antenna module 197 may include an antenna including a radiating element including a conductive material or a conductive pattern formed in or on a substrate (e.g., a printed circuit board (PCB)). According to an embodiment of the disclosure, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment of the disclosure, another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module may include a PCB, a RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment of the disclosure, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment of the disclosure, all or some of operations to be executed at the electronic device 101 may be executed at one or more of the external electronic devices 102 or 104, or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment of the disclosure, the external electronic device 104 may include an Internet-of-Things (IoT) device. The server 108 may be an intelligent server using machine learning and/or a neural network. According to an embodiment of the disclosure, the external electronic device 104 or the server 108 may be included in the second network 199. The electronic device 101 may be applied to intelligent services (e.g., a smart home, a smart city, a smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a complier or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment of the disclosure, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments of the disclosure, each component (e.g., a module or a program) of the above-described components may include a single entity or multiple entities, and some of the multiple entities may be separately disposed in different components. According to various embodiments of the disclosure, one or more of the above-described components may be omitted, or one or more other components may be added. Alternatively or additionally, a plurality of components (e.g., modules or programs) may be integrated into a single component. In such a case, according to various embodiments of the disclosure, the integrated component may still perform one or more functions of each of the plurality of components in the same or similar manner as they are performed by a corresponding one of the plurality of components before the integration. According to various embodiments of the disclosure, operations performed by the module, the program, or another component may be carried out sequentially, in parallel, repeatedly, or heuristically, or one or more of the operations may be executed in a different order or omitted, or one or more other operations may be added.

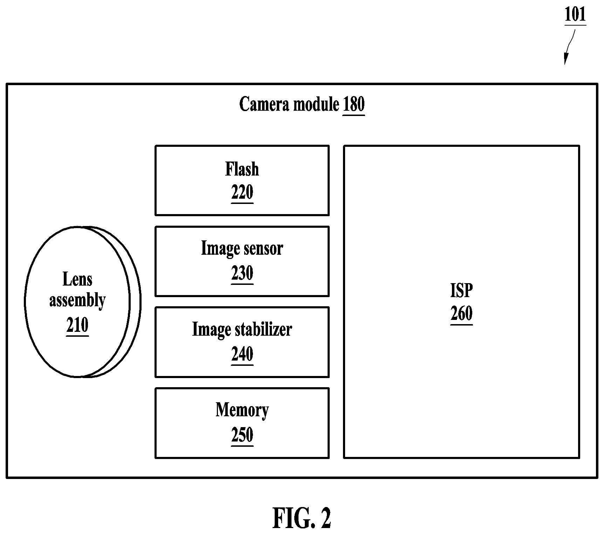

FIG. 2 is a block diagram illustrating a camera module according to an embodiment of the disclosure.

Referring to FIG. 2, the camera module 180 may include a lens assembly 210, a flash 220, an image sensor 230, an image stabilizer 240, memory 250 (e.g., buffer memory), or an ISP 260. The lens assembly 210 may collect light emitted from an object that is a target of which an image is to be captured. The lens assembly 210 may include one or more lenses. According to an embodiment of the disclosure, the camera module 180 may include a plurality of lens assemblies 210. In this case, the camera module 180 may form, for example, a dual camera, 360-degree camera, or spherical camera. A portion of the plurality of lens assemblies 210 may have the same lens properties (e.g., an angle of view, focal length, auto focus, f number, or optical zoom), or at least one of the plurality of lens assemblies 210 may have one or more lens properties that are different from those of other lens assemblies. The lens assembly 210 may include, for example, a wide-angle lens or tele-angle lens.

The flash 220 may emit light to be used to enhance light emitted or reflected from the object. According to an embodiment of the disclosure, the flash 220 may include one or more light-emitting diodes (LEDs) (e.g., a red-green-blue (RGB) LED, a white LED, an IR LED, or an ultraviolet (UV) LED) or a xenon lamp. The image sensor 230 may obtain an image corresponding to the object by converting light emitted or reflected from the object and transmitted through the lens assembly 210 into an electrical signal. According to an embodiment of the disclosure, the image sensor 230 may include, for example, one image sensor selected from among image sensors having different properties, such as, for example, an RGB sensor, a black and white (BW) sensor, an IR sensor, or a UV sensor, a plurality of image sensors having the same property, or a plurality of image sensors having different properties. Each image sensor included in the image sensor 230 may be implemented using, for example, a charge-coupled device (CCD) sensor or a complementary metal-oxide-semiconductor (CMOS) sensor.

The image stabilizer 240 may move at least one lens included in the lens assembly 210 or the image sensor 230 in a specific direction, or control an operation characteristic (e.g., adjust the read-out timing) of the image sensor 230, in response to movement of the camera module 180 or the electronic device 101 including the camera module 180. This may compensate for at least a portion of a negative effect of the movement on an image to be captured. According to an embodiment of the disclosure, the image stabilizer 240 may detect such a movement by the camera module 180 or the electronic device 101 using a gyro sensor (not shown) or an acceleration sensor (not shown) disposed inside or outside the camera module 180. According to an embodiment of the disclosure, the image stabilizer 240 may be implemented, for example, as an optical image stabilizer. The memory 250 may at least temporarily store at least a portion of the image obtained through the image sensor 230 for a subsequent image processing task. For example, when image acquisition is delayed by a shutter or a plurality of images is obtained at a high speed, an obtained original image (e.g., a Bayer-patterned image or high-resolution image) may be stored in the memory 250 and a copy image (e.g., a low-resolution image) corresponding to the original image may be previewed through the display module 160. Subsequently, when a specified condition (e.g., a user input or system command) is satisfied, at least a portion of the original image stored in the memory 250 may be obtained and processed by, for example, the ISP 260. According to an embodiment of the disclosure, the memory 250 may be configured as at least part of the memory 130 or as separate memory that is operated independently from the memory 130.

The ISP 260 may perform one or more image processing operations on the image obtained through the image sensor 230 or the image stored in the memory 250. The one or more image processing operations may include, for example, depth map generation, three-dimensional (3D) modeling, panorama generation, feature point extraction, image synthesis, or image compensation (e.g., noise reduction, resolution adjustment, brightness adjustment, blurring, sharpening, or softening). Additionally or alternatively, the ISP 260 may control at least one of the components (e.g., the image sensor 230) included in the camera module 180 (e.g., control an exposure time, read-out timing, and the like). The image processed by the ISP 260 may be stored again in the memory 250 for further processing or be provided to an external component (e.g., the memory 130, the display module 160, the external electronic device 102, the external electronic device 104, or the server 108) of the camera module 180. According to an embodiment of the disclosure, the ISP 260 may be configured as at least part of the processor 120 or as a separate processor operated independently from the processor 120. When the ISP 260 is configured as a processor separate from the processor 120, at least one image processed by the ISP 260 may be displayed as it is or be displayed through the display module 160 after additional image processing is performed by the processor 120.

According to an embodiment of the disclosure, the electronic device 101 may include a plurality of camera modules 180 having different properties or functions. In this case, for example, at least one of the plurality of camera modules 180 may be a wide-angle camera, and at least another of the plurality of camera modules 180 may be a tele-angle camera. Similarly, at least one of the plurality of camera modules 180 may be a front camera, and at least another one of the plurality of camera modules 180 may be a rear camera.

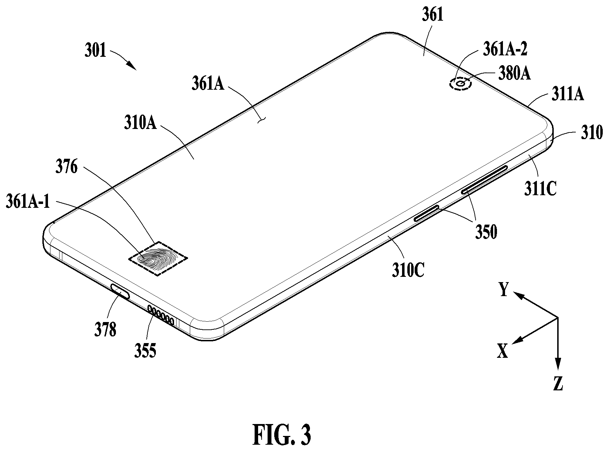

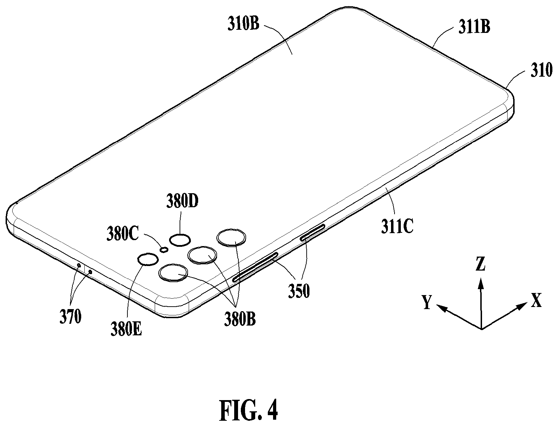

FIG. 3 is a perspective view of an electronic device in one direction according to an embodiment of the disclosure. FIG. 4 is a perspective view of the electronic device in another direction according to an embodiment of the disclosure.

Referring to FIGS. 3 and 4, an electronic device 301 (e.g., the electronic device 101 of FIG. 1) may include a housing 310 including a first surface 310A (e.g., a front surface), a second surface 310B (e.g., a rear surface), and a third surface 310C (e.g., a side surface) enclosing a space between the first surface 310A and the second surface 310B. The first surface 310A may be formed by a first plate 311A of which at least a portion is substantially transparent. For example, the first plate 311A may include a polymer plate or a glass plate including at least one coating layer. The second surface 310B may be formed by a second plate 311B that is substantially opaque. For example, the second plate 311B may be formed of coated or tinted glass, ceramic, polymer, metal (e.g., aluminum, stainless steel (STS), or magnesium), or a combination thereof. The third surface 310C may be formed by a frame 311C that is coupled to the first plate 311A and the second plate 311B and includes a metal and/or polymer. The second plate 311B and the frame 311C may be formed monolithically. The second plate 311B and the frame 311C may be formed of substantially the same material (e.g., aluminum).

The electronic device 301 may include an input module 350 (e.g., the input module 150 of FIG. 1). The input module 350 may be disposed on the third surface 310C. The input module 350 may include at least one key input device. For example, the key input device may include one or more mechanical actuators (e.g., buttons), one or more capacitors, and/or one or more inductors.

The electronic device 301 may include a sound output module 355 (e.g., the sound output module 155 of FIG. 1). The sound output module 355 may be disposed on the third surface 310C. The sound output module 355 may include one or more holes.

The electronic device 301 may include a display module 361 (e.g., the display module 160 of FIG. 1). The display module 361 may be disposed on the first surface 310A. The display module 361 may be visible through at least a portion of the first plate 311A. The display module 361 may have a shape that is substantially the same as the shape of an outer edge of the first plate 311A. The periphery of the display module 361 may substantially coincide with the outer edge of the first plate 311A. The display module 361 may include a touch sensing circuit, a pressure sensor for measuring the intensity (pressure) of a touch, and/or a digitizer for detecting a magnetic-type stylus pen. The display module 361 may include a screen display area 361A that is visually exposed to display content using pixels. The screen display area 361A may include a sensing area 361A-1. The sensing area 361A-1 may overlap at least a partial area of the screen display area 361A. The sensing area 361A-1 may allow transmission of an input signal related to a sensor module 376 (e.g., the sensor module 176 of FIG. 1). The sensing area 361A-1 may display content, similarly to the screen display area 361A that does not overlap the sensing area 361A-1. For example, the sensing area 361A-1 may display the content while the sensor module 376 is not operating. At least a portion of a camera area 361A-2 may overlap the screen display area 361A. The screen display area 361A may include the camera area 361A-2. The camera area 361A-2 may allow transmission of an optical signal related to a first camera module 380A (e.g., the camera module 180 of FIG. 1 and/or the camera module 180 of FIG. 2). At least a portion of the camera area 361A-2, which overlaps the screen display area 361A, may display content, similarly to the screen display area 361A that does not overlap the camera area 361A-2. For example, the camera area 361A-2 may display the content while the first camera module 380A is not operating. At least a portion of the camera area 361A-2 may overlap the screen display area 361A. The screen display area 361A may include the camera area 361A-2. The camera area 361A-2 may allow transmission of an optical signal related to the first camera module 380A (e.g., the camera module 180 of FIG. 1 and/or the camera module 180 of FIG. 2). The camera area 361A-2 may also be referred to as a "display hole." The camera area 361A-2 may have a substantially circular or oval shape. In an embodiment not shown, the display module 361 may include at least one or a combination of an audio module 370, the sensor module 376, the first camera module 380A, or a light-emitting element (not shown) on a rear surface (e.g., a surface in a +Z direction) of the screen display area 361A. For example, in the electronic device 301, a camera module (e.g., the first camera module 380A) may be disposed on a rear surface of at least one of the first surface 310A (e.g., a front surface) or the third surface 310C (e.g., a side surface), facing the first surface 310A and/or the third surface 310C. For example, the first camera module 380A may not be visually exposed to the screen display area 361A and may include an under-display camera (UDC), which may also be referred to as an "under-panel camera (UPC)."

The electronic device 301 may include the audio module 370 (e.g., the audio module 170 of FIG. 1). The audio module 370 may be disposed on the third surface 310C. The audio module 370 may obtain a sound through at least one hole.

The electronic device 301 may include the sensor module 376. The sensor module 376 may be disposed on the first surface 310A. The sensor module 376 may form the sensing area 361A-1 in at least a portion of the screen display area 361A. The sensor module 376 may receive an input signal transmitted through the sensing area 361A-1 and generate an electrical signal based on the received input signal. For example, the input signal may have a designated physical quantity (e.g., heat, light, temperature, sound, pressure, or ultrasound). The input signal may include a signal related to biometric information (e.g., a fingerprint) of a user.

The electronic device 301 may include a connecting terminal 378 (e.g., the connecting terminal 178 of FIG. 1). The connecting terminal 378 may be disposed on the third surface 310C. For example, when the electronic device 301 is viewed in one direction (e.g., a -X direction), the connecting terminal 378 may be positioned substantially in a central portion of the third surface 310C, and the sound output module 355 may be disposed on one side (e.g., the right side) with respect to the connecting terminal 378.

The electronic device 301 may include the first camera module 380A (e.g., the camera module 180 of FIG. 1 and/or the camera module 180 of FIG. 2). The first camera module 380A may be disposed on the first surface 310A. At least a portion of the first camera module 380A may be disposed under the display module 361. The first camera module 380A may receive an optical signal transmitted through the camera area 361A-2.

The electronic device 301 may include a plurality of second camera modules 380B (e.g., the camera module 180 of FIG. 1 and/or the camera module 180 of FIG. 2). The plurality of second camera modules 380B may be positioned on the second surface 310B. The plurality of second camera modules 380B may be arranged in a first row in one direction (e.g., a Y direction) of the second plate 311B. The plurality of second camera modules 380B may have different fields of view. For example, the plurality of second camera modules 380B may include an ultra-wide-angle camera, a wide-angle camera, and/or a tele camera.

The electronic device 301 may include a light module 380C (e.g., the flash 220 of FIG. 2). The light module 380C may be arranged in a second row that is substantially parallel to the first row of the plurality of second camera modules 380B on the second surface 310B. The light module 380C may include one or more light-emitting diodes or xenon lamps. The light module 380C may include a sensor configured to detect external light. For example, the sensor may include a flicker sensor.

The electronic device 301 may include a third camera module 380D. The pixel, magnification, and/or field of view of the third camera module 380D may differ from the pixel, magnification, and/or field of view of at least one second camera module 380B. The third camera module 380D may be arranged in the second row that is substantially parallel to the first row of the plurality of second camera modules 380B on the second surface 310B.

The electronic device 301 may include a fourth camera module 380E. The fourth camera module 380E, which may also be referred to as a "depth camera" or a "time-of-flight (ToF) camera," may be configured to measure the distance between the fourth camera module 380E and an object. For example, the fourth camera module 380E may be configured to measure the distance using at least one or a combination of an ultrasonic wave, an infrared ray, or a laser. The fourth camera module 380E may be arranged in the second row that is substantially parallel to the first row of the plurality of second camera modules 380B on the second surface 310B.

Meanwhile, the embodiments set forth herein may also apply to electronic devices of various shapes/forms (e.g., a foldable electronic device, a slidable electronic device, a rollable electronic device, a digital camera, a digital video camera, a tablet personal computer (PC), a laptop computer, and other electronic devices), in addition to the electronic device shown in FIGS. 3 and 4.

As used herein, the terms "substantially," "approximately," "generally," and "about" in reference to a given parameter, property, or condition may include a degree that one of ordinary skill in the art would understand that the given parameter, property, or condition is met with a small degree of variance, such as within acceptable manufacturing tolerances. For example, a parameter that is substantially met may be at least about 90% met, at least about 95% met, or at least about 99% met.

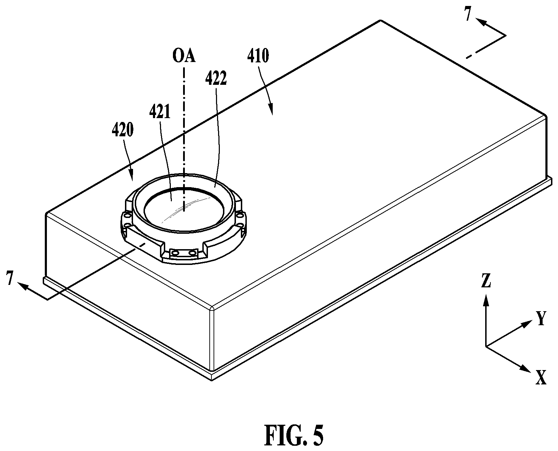

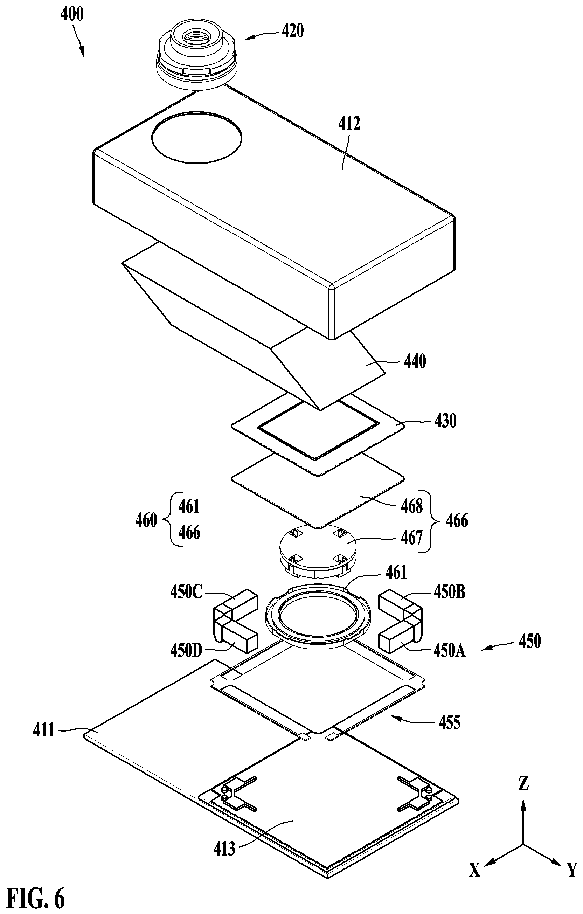

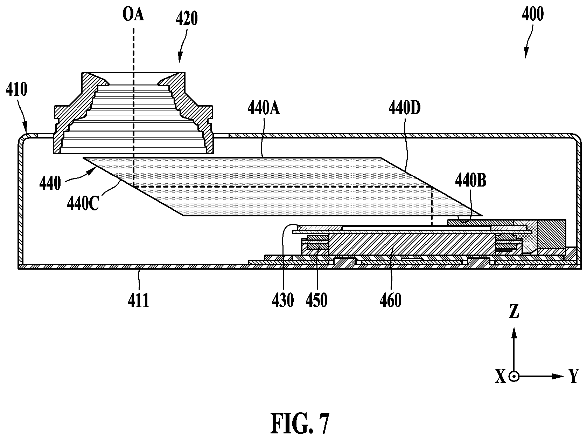

FIG. 5 is a perspective view of a camera module according to an embodiment of the disclosure. FIG. 6 is an exploded perspective view of the camera module according to an embodiment of the disclosure. FIG. 7 is a cross-sectional view taken along line 7-7 of the camera module of FIG. 5, according to an embodiment of the disclosure.

Referring to FIGS. 5 to 7, a camera module 400 (e.g., the camera module 180 of FIG. 1, the camera module 180 of FIG. 2, and/or the second camera module 380B and/or the third camera module 380D of FIGS. 3 and 4) may include a camera housing 410. The camera housing 410 may house one or more camera-related components. The camera housing 410 may include a base 411 configured to support one or more camera-related components and provide an electrical connection to the one or more camera-related components. For example, the base 411 may include a PCB 413. The camera housing 410 may include a camera cover 412, which may also be referred to as a "shield can." The camera cover 412 may cover one or more camera-related components.

The camera module 400 may include a lens assembly 420 (e.g., the lens assembly 210 of FIG. 2). The lens assembly 420 may include at least one lens 421 having a defined optical axis OA. A portion of the optical axis OA may be defined as a line connecting the center of curvature of a first surface of at least one lens 421 to the center of curvature of an N-th surface (N is a natural number). The lens assembly 420 may include a lens housing 422 configured to house at least one lens 421. The lens housing 422 may be coupled to the camera cover 412.

The camera module 400 may include an image sensor 430 (e.g., the image sensor 230 of FIG. 2). The image sensor 430 may receive light passing through at least one lens 421.

The camera module 400 may include a reflector 440. The reflector 440 may reflect light passing through at least one lens 421 toward the image sensor 430. The reflector 440 may include an incident surface 440A through which light is incident, an exit surface 440B through which light exits, a first reflective surface 440C between the incident surface 440A and the exit surface 440B and configured to reflect light incident through the incident surface 440A, and a second reflective surface 440D that is opposite to the first reflective surface 440C, between the incident surface 440A and the exit surface 440B, and configured to reflect light reflected by the first reflective surface 440C toward the exit surface 440B. The optical axis OA may be defined as an optical path leading to the lens assembly 420, the reflector 440, and the image sensor 430.

In an embodiment not shown, the reflector 440 may include a substantially triangular cross-section solid having one of the first reflective surface 440C and the second reflective surface 440D. In an embodiment not shown, the reflector 440 may include a mirror having at least one reflective surface.

The camera module 400 may include a first piezoelectric actuator 450. The first piezoelectric actuator 450, which may also be referred to as an "optical image stabilization (OIS) piezoelectric actuator," may move (e.g., perform a linear motion and/or a rolling motion with respect to the optical axis OA), in a piezoelectric manner, the image sensor 430 in a direction (e.g., an XY plane direction) that is substantially orthogonal to the optical axis OA.

The first piezoelectric actuator 450 may include a first resonator 450A and a second resonator 450B. The first resonator 450A, which may also be referred to as a "first OIS resonator," may generate power in a first direction (e.g., an X-axis direction) that is substantially orthogonal to the optical axis OA. The second resonator 450B, which may also be referred to as a "second OIS resonator," may generate power in a second direction (e.g., a Y-axis direction) that is substantially orthogonal to the optical axis OA and the first direction.

The first piezoelectric actuator 450 may include a plurality of pairs of resonators. For example, one pair of resonators may include the first resonator 450A and the second resonator 450B, and another pair of resonators may include a third resonator 450C and a fourth resonator 450D. The third resonator 450C, which may also be referred to as a "third OIS resonator," may generate power in the first direction (e.g., an X-axis direction) that is substantially orthogonal to the optical axis OA. The fourth resonator 450D, which may also be referred to as a "fourth resonator," may generate power in the second direction (e.g., a Y-axis direction) that is substantially orthogonal to the optical axis OA and the first direction. The first resonator 450A and the second resonator 450B may be respectively disposed at both edges based on a first corner of the image sensor 430, and the third resonator 450C and the fourth resonator 450D may be respectively disposed at both edges based on a second corner of the image sensor 430, which is opposite to the first corner of the image sensor 430.

The first piezoelectric actuator 450 may include a first moving body 455. The first moving body 455 may receive power from the first resonator 450A and the third resonator 450C and move the image sensor 430 in the first direction (e.g., an X-axis direction). The first moving body 455 may receive power from the second resonator 450B and the fourth resonator 450D and move the image sensor 430 in the second direction (e.g., a Y-axis direction).

In an embodiment not shown, the first piezoelectric actuator 450 may move the lens assembly 420 and/or the reflector 440 in a direction that is substantially orthogonal to the optical axis OA.

The camera module 400 may include a second piezoelectric actuator 460. The second piezoelectric actuator 460, which may also be referred to as an "auto-focus (AF) piezoelectric actuator," may move (e.g., perform a linear motion), in a piezoelectric manner, the image sensor 430 in a direction (e.g., a Z-axis direction) along the optical axis OA.

The second piezoelectric actuator 460 may include a fifth resonator 461. The fifth resonator 461, which may also be referred to as an "AF resonator," may generate power in the direction (e.g., a Z-axis direction) along the optical axis OA.

The second piezoelectric actuator 460 may include a second moving body 466. The second moving body 466 may receive power from the fifth resonator 461 and move the image sensor 430 in the direction (e.g., a Z-axis direction) along the optical axis OA.

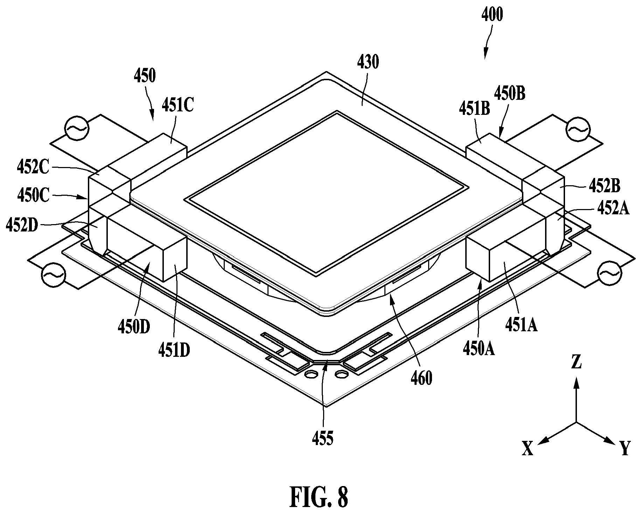

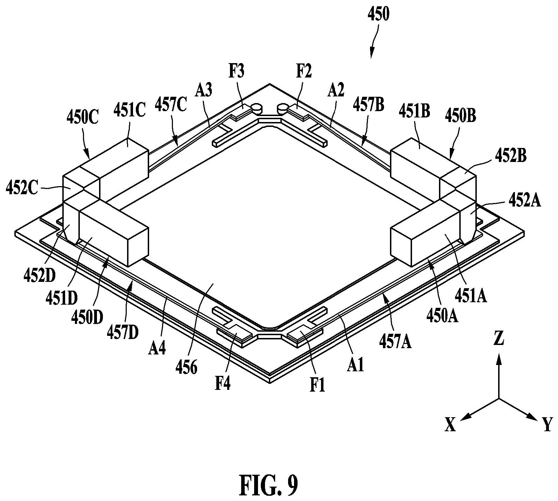

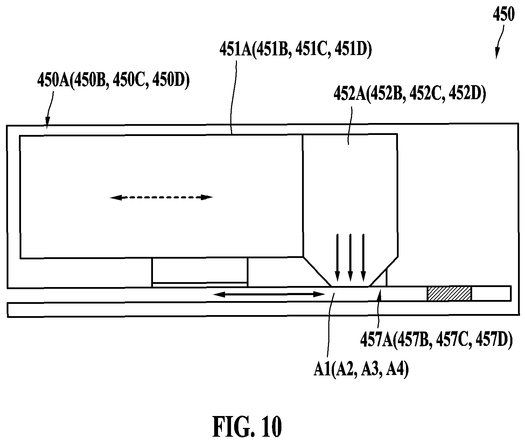

FIG. 8 is a perspective view of an image sensor and a first piezoelectric actuator, according to an embodiment of the disclosure. FIG. 9 is a perspective view of the first piezoelectric actuator according to an embodiment of the disclosure. FIG. 10 is a side view of the first piezoelectric actuator according to an embodiment of the disclosure.

Referring to FIGS. 8 to 10, the camera module 400 may include the image sensor 430, the first piezoelectric actuator 450, and the second piezoelectric actuator 460. The camera module 400 may be stacked in the order of the image sensor 430, the second piezoelectric actuator 460, and the first piezoelectric actuator 450 when viewed in a direction along an optical axis (e.g., a Z-axis direction). However, embodiments are not limited thereto, and the stacking order may vary according to the structure of the camera module 400, the size of the first piezoelectric actuator 450, and/or the size of the second piezoelectric actuator 460.

The first piezoelectric actuator 450 may include the first resonator 450A. The first resonator 450A may include a first vibrator 451A configured to generate a vibration in a first direction (e.g., an X-axis direction) that is substantially orthogonal to the optical axis OA. The first vibrator 451A may operate to extend and contract in a d33 mode or longitudinal mode, or a d31 mode or transverse mode. The first vibrator 451A may include a substantially elongated shape (e.g., a rectangular parallelepiped shape). The first vibrator 451A may be disposed, among first edges (e.g., edges in a +Y direction) of the image sensor 430, in a region that is adjacent to a first corner between a first edge (e.g., an edge in a +Y direction) and a second edge (e.g., an edge in a -X direction). The first vibrator 451A may be directed in the first direction (e.g., an X-axis direction) that is substantially orthogonal to the optical axis OA. The first vibrator 451A may include a piezoelectric material.

The first resonator 450A may include a first tip 452A configured to transmit the vibration generated from the first vibrator 451A to the first moving body 455. The first tip 452A may press a portion of the first moving body 455 (e.g., a first elastically deformable region 457A). The first tip 452A may be in contact with the portion of the first moving body 455 (e.g., the first elastically deformable region 457A). The first tip 452A may include a metallic material.

The contact region of the first tip 452A may have a first length (e.g., a dimension in an X-axis direction) that is substantially parallel to a vibration direction (e.g., an X-axis direction) of the first vibrator 451A and a first width (e.g., a dimension in a Y-axis direction) that is substantially orthogonal to the vibration direction of the first vibrator 451A. The first width may be greater than the first length. For example, the contact region of the first tip 452A may have a substantially rectangular shape. The first width may be substantially greater than or equal to the maximum displacement of the first moving body 455 in a first longitudinal direction (e.g., an X-axis direction).

The first tip 452A may have a first height (e.g., a dimension in a Z-axis direction) that is orthogonal to each of the first length and the first width. The first tip 452A may have a shape that at least partially decreases along the first height toward the contact region of the first tip 452A.

The first tip 452A may be disposed, among the first edges (e.g., edges in a +Y direction) of the image sensor 430, in a region that is adjacent to the first corner between the first edge (e.g., an edge in a +Y direction) and the second edge (e.g., an edge in a -X direction). The first tip 452A may contact the first vibrator 451A. The first tip 452A may be disposed along the first direction (e.g., an X-axis direction) that is substantially orthogonal to the optical axis OA. When a vibration displacement occurs in the first vibrator 451A, the first moving body 455 may move in the first direction (e.g., an X-axis direction) by the frictional force at a contact portion between the first tip 452A and the first moving body 455.

The first piezoelectric actuator 450 may include the second resonator 450B. The second resonator 450B may include a second vibrator 451B configured to generate a vibration in a second direction (e.g., a Y-axis direction) that is substantially orthogonal to the optical axis OA and the first direction (e.g., an X-axis direction). The second vibrator 451B may operate to extend and contract in a d33 mode or a d31 mode. The second vibrator 451B may include a substantially elongated shape (e.g., a rectangular parallelepiped shape). The second vibrator 451B may be disposed, among second edges (e.g., edges in a -X direction) of the image sensor 430, in a region that is adjacent to a first corner between a first edge (e.g., an edge in a +Y direction) and a second edge (e.g., an edge in a -X direction). The second vibrator 451B may be directed in the second direction (e.g., a Y-axis direction) that is substantially orthogonal to the optical axis OA. The second vibrator 451B may include a piezoelectric material.

The second resonator 450B may include a second tip 452B configured to transmit the vibration generated from the second vibrator 451B to the first moving body 455. The second tip 452B may press a portion of the first moving body 455 (e.g., a second elastically deformable region 457B). The second tip 452B may be in contact with the portion of the first moving body 455 (e.g., the second elastically deformable region 457B). The second tip 452B may include a metallic material.

The contact region of the second tip 452B may have a second length (e.g., a dimension in a Y-axis direction) that is substantially parallel to a vibration direction (e.g., a Y-axis direction) of the second vibrator 451B and a second width (e.g., a dimension in an X-axis direction) that is substantially orthogonal to the vibration direction of the second vibrator 451B. The second width may be greater than the second length. The second width may be substantially greater than or equal to the maximum displacement of the first moving body 455 in a second longitudinal direction (e.g., a Y-axis direction).

The second tip 452B may have a second height (e.g., a dimension in a Z-axis direction) that is orthogonal to each of the second length and the second width. The second tip 452B may have a shape that at least partially decreases along the second height toward the contact region of the second tip 452B.

The second tip 452B may contact the second vibrator 451B. The second tip 452B may be disposed, among the second edges (e.g., edges in a -X direction) of the image sensor 430, in a region that is adjacent to the first corner between the first edge (e.g., an edge in a +Y direction) and the second edge (e.g., an edge in a -X direction). The second tip 452B may be disposed along the second direction (e.g., a Y-axis direction) that is substantially orthogonal to the optical axis OA and the first direction (e.g., an X-axis direction). When a vibration displacement occurs in the second vibrator 451B, the first moving body 455 may move in the second direction (e.g., a Y-axis direction) by the frictional force at a contact portion between the second tip 452B and the first moving body 455.

The first piezoelectric actuator 450 may include the third resonator 450C. The third resonator 450C may include a third vibrator 451C configured to generate a vibration in the first direction (e.g., an X-axis direction) that is substantially orthogonal to the optical axis OA. The first vibrator 451A may operate to extend and contract in a d33 mode or a d31 mode. The third vibrator 451C may include a substantially elongated shape (e.g., a rectangular parallelepiped shape). The third vibrator 451C may be disposed, among third edges (e.g., edges in a -Y direction) of the image sensor 430, in a region that is adjacent to a second corner between a third edge (e.g., an edge in a -Y direction) and a fourth edge (e.g., an edge in a +X direction). The third vibrator 451C may be directed in the first direction (e.g., an X-axis direction) that is substantially orthogonal to the optical axis OA. The third vibrator 451C may include a piezoelectric material.

The third resonator 450C may include a third tip 452C configured to transmit the vibration generated from the third vibrator 451C to the first moving body 455. The third tip 452C may press a portion of the first moving body 455 (e.g., a third elastically deformable region 457C). The third tip 452C may be in contact with the portion of the first moving body 455 (e.g., the third elastically deformable region 457C). The third tip 452C may include a metallic material.

The contact region of the third tip 452C may have a third length (e.g., a dimension in an X-axis direction) that is substantially parallel to a vibration direction (e.g., an X-axis direction) of the third vibrator 451C and a third width (e.g., a dimension in a Y-axis direction) that is substantially orthogonal to the vibration direction of the third vibrator 451C. The third width may be greater than the third length. The third width may be substantially greater than or equal to the maximum displacement of the first moving body 455 in a third longitudinal direction (e.g., an X-axis direction).

The third tip 452C may have a third height (e.g., a dimension in a Z-axis direction) that is orthogonal to each of the third length and the third width. The third tip 452C may have a shape that at least partially decreases along the third height toward the contact region of the third tip 452A.

The third tip 452C may be disposed, among the third edges (e.g., edges in a -Y direction) of the image sensor 430, in a region that is adjacent to the second corner between the third edge (e.g., an edge in a -Y direction) and the fourth edge (e.g., an edge in a +X direction). The third tip 452C may contact the third vibrator 451C. The third tip 452C may be disposed along the first direction (e.g., an X-axis direction) that is substantially orthogonal to the optical axis OA. When a vibration displacement occurs in the third vibrator 451C, the first moving body 455 may move in the first direction (e.g., an X-axis direction) by the frictional force at a contact portion between the third tip 452C and the first moving body 455.

The first piezoelectric actuator 450 may include the fourth resonator 450D. The fourth resonator 450D may include a fourth vibrator 451D configured to generate a vibration in the second direction (e.g., a Y-axis direction) that is substantially orthogonal to the optical axis OA and the first direction (e.g., an X-axis direction). The fourth vibrator 451D may operate to extend and contract in a d33 mode or a d31 mode. The fourth vibrator 451D may include a substantially elongated shape (e.g., a rectangular parallelepiped shape). The fourth vibrator 451D may be disposed, among fourth edges (e.g., edges in a +X-axis direction) of the image sensor 430, in a region that is adjacent to a second corner between a third edge (e.g., an edge in a -Y direction) and a fourth edge (e.g., an edge in a +X direction). The fourth vibrator 451D may be directed in the second direction (e.g., a Y-axis direction) that is substantially orthogonal to the optical axis OA. The fourth vibrator 451D may include a piezoelectric material.

The fourth resonator 450D may include a fourth tip 452D configured to transmit the vibration generated from the fourth vibrator 451D to the first moving body 455. The fourth tip 452D may press a portion of the first moving body 455 (e.g., a fourth elastically deformable region 457D). The fourth tip 452D may be in contact with the portion of the first moving body 455 (e.g., the fourth elastically deformable region 457D). The fourth tip 452D may include a metallic material.

The contact region of the fourth tip 452D may have a fourth length (e.g., a dimension in a Y-axis direction) that is substantially parallel to a vibration direction (e.g., a Y-axis direction) of the fourth vibrator 451D and a fourth width (e.g., a dimension in an X-axis direction) that is substantially orthogonal to the vibration direction of the fourth vibrator 451D. The fourth width may be greater than the fourth length. The fourth width may be substantially greater than or equal to the maximum displacement of the first moving body 455 in a fourth longitudinal direction (e.g., a Y-axis direction).

The fourth tip 452D may have a fourth height (e.g., a dimension in a Z-axis direction) that is orthogonal to each of the fourth length and the fourth width. The fourth tip 452D may have a shape that at least partially decreases along the fourth height toward the contact region of the fourth tip 452D.

The fourth tip 452D may contact the fourth vibrator 451D. The fourth tip 452D may be disposed, among the fourth edges (e.g., edges in a +X direction) of the image sensor 430, in a region that is adjacent to the second corner between the third edge (e.g., an edge in a -Y direction) and the fourth edge (e.g., an edge in a +X direction). The fourth tip 452D may be disposed along the second direction (e.g., a Y-axis direction) that is substantially orthogonal to the optical axis OA and the first direction (e.g., an X-axis direction). When a vibration displacement occurs in the fourth vibrator 451D, the first moving body 455 may move in the second direction (e.g., a Y-axis direction) by the frictional force at a contact portion between the fourth tip 452D and the first moving body 455.

The first vibrator 451A, the first tip 452A, the second vibrator 451B, the second tip 452B, the third vibrator 451C, the third tip 452C, the fourth vibrator 451D, and the fourth tip 452D may be substantially on the same plane. This may prevent the first resonator 450A, the second resonator 450B, the third resonator 450C, and the fourth resonator 450D from interfering with each other's operations and may reduce the size of the first piezoelectric actuator 450.

The first piezoelectric actuator 450 may include the first moving body 455. The first moving body 455 may include a first moving plate 456. The first moving plate 456 may support the second piezoelectric actuator 460 or the image sensor 430. The first moving plate 456 may have a polygonal shape (e.g., a quadrangle shape).

The first moving body 455 may include the first elastically deformable region 457A. The first elastically deformable region 457A may be elastically deformed with respect to the first moving plate 456. The first elastically deformable region 457A may include a first fixed end F1 connected to a portion of a first edge (e.g., an edge in a +Y direction) of the first moving plate 456 and a first elastic arm A1 configured to be bent with respect to the first fixed end F1. The first elastic arm A1 may be separated from the first edge along the first edge (e.g., an edge in a +Y direction) of the first moving plate 456. The first elastic arm A1 may be maintained pressed by the first tip 452A. The first elastic arm A1 may be frictionally coupled to the first tip 452A. Contact pressure between the first tip 452A and the first elastic arm A1 may be established by the bending of the first elastic arm A1.

The first moving body 455 may include the second elastically deformable region 457B. The second elastically deformable region 457B may be elastically deformed with respect to the first moving plate 456. The second elastically deformable region 457B may include a second fixed end F2 connected to a portion of a second edge (e.g., an edge in a -X direction) of the first moving plate 456 and a second elastic arm A2 configured to be bent with respect to the second fixed end F2. The second elastic arm A2 may be separated from the second edge along the second edge (e.g., an edge in a -X direction) of the first moving plate 456. The second elastic arm A2 may be maintained pressed by the second tip 452B. The second elastic arm A2 may be frictionally coupled to the second tip 452B. Contact pressure between the second tip 452B and the second elastic arm A2 may be established by the bending of the second elastic arm A2.

The first moving body 455 may include the third elastically deformable region 457C. The third elastically deformable region 457C may be elastically deformed with respect to the first moving plate 456. The third elastically deformable region 457C may be disposed opposite to the first elastically deformable region 457A. The third elastically deformable region 457C may include a third fixed end F3 connected to a portion of a third edge (e.g., an edge in a -Y direction) of the first moving plate 456 and a third elastic arm A3 configured to be bent with respect to the third fixed end F3. The third elastic arm A3 may be substantially parallel to the first elastic arm A1. The third elastic arm A3 may be separated from the third edge along the third edge (e.g., an edge in a -Y direction) of the first moving plate 456. The third elastic arm A3 may be maintained pressed by the third tip 452C. The third elastic arm A3 may be frictionally coupled to the third tip 452C. Contact pressure between the third tip 452C and the third elastic arm A3 may be established by the bending of the third elastic arm A3.

The first moving body 455 may include the fourth elastically deformable region 457D. The fourth elastically deformable region 457D may be elastically deformed with respect to the first moving plate 456. The fourth elastically deformable region 457D may be disposed opposite to the second elastically deformable region 457B. The fourth elastically deformable region 457D may include a fourth fixed end F4 connected to a portion of a fourth edge (e.g., an edge in a +X direction) of the first moving plate 456 and a fourth elastic arm A4 configured to be bent with respect to the fourth fixed end F4. The fourth elastic arm A4 may be substantially parallel to the second elastic arm A2. The fourth elastic arm A4 may be separated from the fourth edge along the fourth edge (e.g., an edge in a +X direction) of the first moving plate 456. The fourth elastic arm A4 may be maintained pressed by the fourth tip 452D. The fourth elastic arm A4 may be frictionally coupled to the fourth tip 452D. Contact pressure between the fourth tip 452D and the fourth elastic arm A4 may be established by the bending of the fourth elastic arm A4.

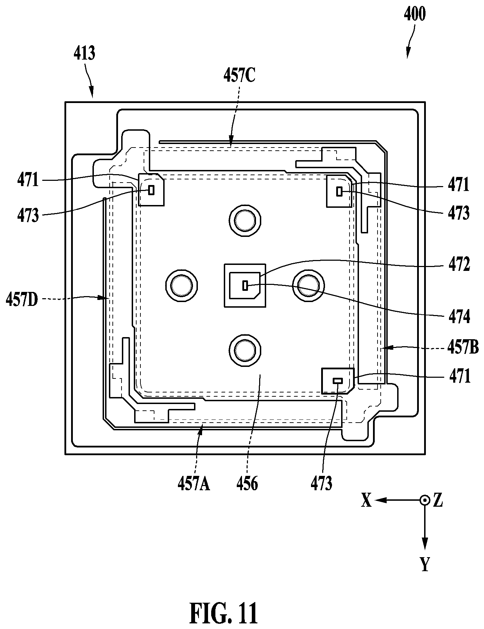

FIG. 11 is a plan view of a sensor arrangement structure of a camera module, according to an embodiment of the disclosure.

Referring to FIG. 11, the camera module 400 may include a plurality of first sensors 473 configured to detect a position of the first moving body 455 (see FIGS. 8 to 10) moving in a direction (e.g., an XY plane direction) that is substantially orthogonal to an optical axis (e.g., a Z-axis). For example, the plurality of first sensors 473 may each include a Hall sensor. The plurality of first sensors 473 may be disposed at positions corresponding to first sensing magnets 471 disposed in corner regions of the first moving plate 456 on the PCB 413.

In an embodiment of the disclosure, the camera module 400 may include at least three first sensors 473. At least two first sensors 473 among at least three first sensors 473 may detect a movement of the first moving body 455 in a first direction (e.g., an X-axis direction), and the remaining at least one first sensor 473 may detect a movement of the first moving body 455 in a second direction (e.g., a Y-axis direction) that is substantially orthogonal to the first direction. A processor (e.g., the processor 120 of FIG. 1) may determine the rotation amount of the first moving body 455 based on a difference in the positions of the first moving body 455 (e.g., a difference in the positions of the first sensing magnets 471) detected by each of at least two first sensors 473 that detect the movement of the first moving body 455 in the first direction. At least two first sensors 473 that detected the movement of the first moving body 455 in the same direction may be spaced apart from each other. Increasing the separation distance between at least two first sensors 473 may increase the sensitivity of sensing the rotation amount of the first moving body 455. At least three first sensors 473 may be non-contact type sensors that do not contact the first moving body 455. The processor may detect the position based on a difference in physical quantities (e.g., magnetic flux, quantity of light, capacitance, inductance, and/or other detectable physical quantities) detect according to a distance (e.g., a distance in an XY direction or a distance in a Z-axis direction) between the first sensor 473 and the first moving body 455.

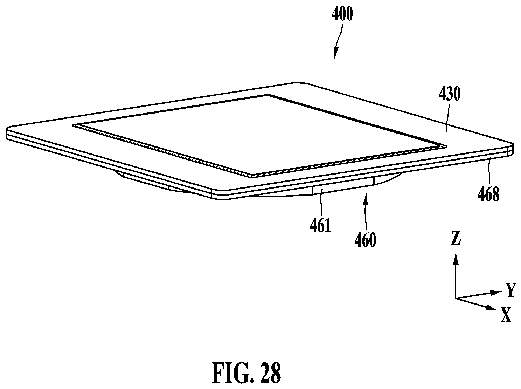

The camera module 400 may include a second sensor 474 configured to detect a position of the second moving body 466 (see FIGS. 5 to 7, and 28 to 31) moving in a direction along the optical axis (e.g., a Z-axis). For example, the second sensor 474 may include a Hall sensor. The second sensor 474 may be disposed at a position corresponding to a second sensing magnet 472 disposed in a carrier 467 (see FIGS. 28 to 31) on the PCB 413.

Furthermore, although the embodiments describe the plurality of first sensors 473 and the second sensor 474 as sensors (e.g., Hall sensors) that detect magnetic flux, embodiments are not limited thereto, and at least one of the sensors may be another type of sensor (e.g., a photodiode, a capacitance sensor, an inductance sensor, and/or a sensor capable of detecting other physical quantities).

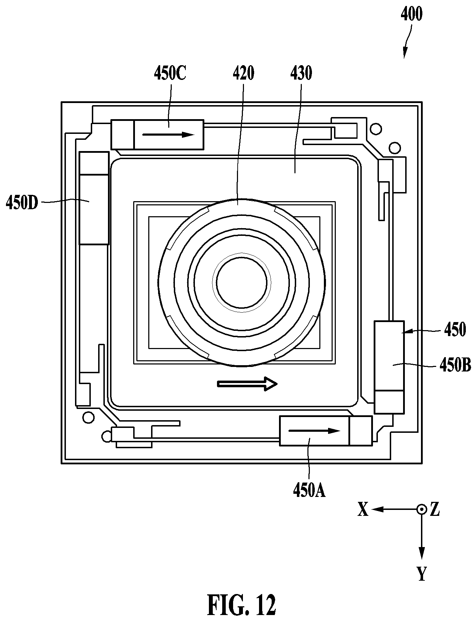

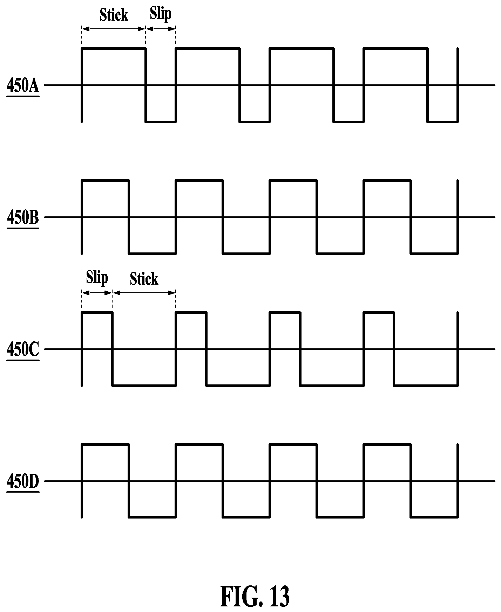

FIG. 12 is a diagram illustrating an image sensor shifting in a first direction that is substantially orthogonal to an optical axis, according to an embodiment of the disclosure. FIG. 13 is a graph illustrating a voltage driving waveform applied to the first piezoelectric actuator 450 of FIG. 12, according to an embodiment of the disclosure.

Referring to FIGS. 12 and 13, the camera module 400 may include the lens assembly 420, the image sensor 430, and the first piezoelectric actuator 450. The first piezoelectric actuator 450 may cause the lens assembly 420 or the image sensor 430 to shift in a first direction (e.g., a -X direction) that is substantially orthogonal to an optical axis (e.g., a Z-axis) in a slip-and-stick manner by a difference in the extension vibration speed and the contraction vibration speed of a vibrator. For example, the first piezoelectric actuator 450 may be controlled by a pulse width modulation (PWM).

The first resonator 450A, in one cycle of a driving waveform, may be applied with alternating current (AC) voltage so as to have a first section (stick section) having first voltage and a first length and a second section (slip section) having second voltage and a second length. Here, the first voltage and the second voltage may have substantially the same magnitude and opposite potentials (e.g., the first voltage has first signage (e.g., positive) and the second voltage has second signage (e.g., negative) that is opposite to the first signage). The second length may be less than the first length (e.g., first length: second length = 7:3).

The second resonator 450B, in one cycle of the driving waveform, may be applied with AC voltage so as to have a third section having third voltage and a third length and a fourth section having fourth voltage and a fourth length. Here, the third voltage and the fourth voltage may have substantially the same magnitude and opposite potentials (e.g., the third voltage has first signage (e.g., positive) and the fourth voltage has second signage (e.g., negative) that is opposite to the first signage). The third length may be substantially the same as the fourth length (e.g., third length: fourth length = 5:5).

The third resonator 450C, in one cycle of the driving waveform, may be applied with AC voltage so as to have a fifth section (slip section) having fifth voltage and a fifth length and a sixth section (stick section) having sixth voltage and a sixth length. Here, the fifth voltage and the sixth voltage may have substantially the same magnitude and opposite potentials (e.g., the fifth voltage has first signage (e.g., positive) and the sixth voltage has second signage (e.g., negative) that is opposite to the first signage). The fifth length may be substantially the same as the second length, the sixth length may be substantially the same as the first length, and the sixth length may be greater than the fifth length (e.g., fifth length: sixth length = 3:7).

The fourth resonator 450D, in one cycle of the driving waveform, may be applied with AC voltage so as to have a seventh section having seventh voltage and a seventh length and an eighth section having eighth voltage and an eighth length. Here, the seventh voltage and the eighth voltage may have substantially the same magnitude and opposite potentials (e.g., the seventh voltage has first signage (e.g., positive) and the eighth voltage has second signage (e.g., negative) that is opposite to the first signage). The seventh length may be substantially the same as the third length, the eighth length may be substantially the same as the fourth length, and the seventh length may be substantially the same as the eighth length (e.g., seventh length: eighth length = 5:5).

Operating the resonators (e.g., the second resonator 450B and the fourth resonator 450D) so as to have substantially the same section length in one cycle of the driving waveform may reduce the driving loss of an actuator by reducing the frictional force between the remaining resonators (e.g., the first resonator 450A and the third resonator 450C) and a moving body (e.g., the moving body 455 of FIGS. 5 to 7), compared to not operating the resonators.

Switching between forward and reverse directions of the lens assembly 420 or the image sensor 430 may be achieved by changing the ratio of the section lengths (e.g., changing from first section: second section 7:3 to 3:7 or from 3:7 to 7:3) in one cycle of the driving waveform.

In an embodiment not shown, the first piezoelectric actuator 450 may operate only two resonators (e.g., the first resonator 450A and the third resonator 450C) among the plurality of resonators and may not operate the remaining two resonators (e.g., the second resonator 450B and the fourth resonator 450D). For example, voltage of substantially 0 volts (V) may be applied to the second resonator 450B and the fourth resonator 450D.

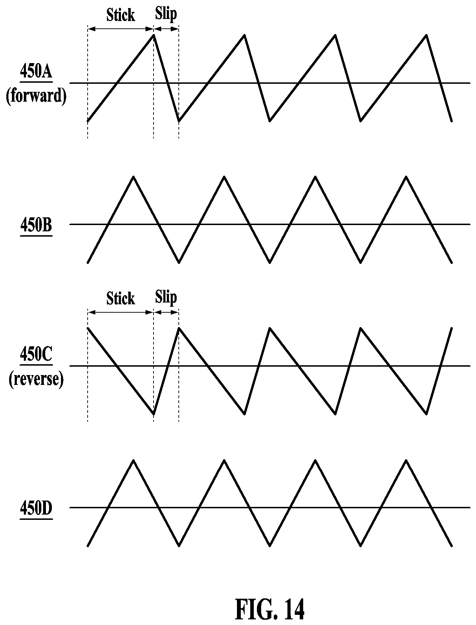

FIG. 14 is a graph illustrating a voltage driving waveform applied to the first piezoelectric actuator of FIG. 11, according to an embodiment of the disclosure.

Referring to FIG. 14, the first piezoelectric actuator 450 may use a triangular driving waveform to cause the lens assembly 420 or the image sensor 430 to shift in a first direction (e.g., a -X direction) that is substantially orthogonal to an optical axis (e.g., a Z-axis).

The first resonator 450A, in one cycle of a driving waveform, may be applied with AC voltage so as to have a first section (stick section) having a first length and a second section (slip section) having a second length. Here, the first length may be greater than the second length (e.g., first length: second length = 7:3). The applied voltage may perform a transition, in the first section, from first voltage of second signage (e.g., negative) to second voltage of first signage (e.g., positive) that is opposite to the second signage and perform a transition, in the second section, from the second voltage to the first voltage.

The second resonator 450B, in one cycle of the driving waveform, may be applied with AC voltage so as to have a third section having a third length and a fourth section having a fourth length. Here, the third length may be substantially the same as the fourth length (e.g., third length: fourth length = 5:5). The applied voltage may perform a transition, in the third section, from third voltage of second signage (e.g., negative) to fourth voltage of first signage (e.g., positive) that is opposite to the second signage and perform a transition, in the fourth section, from the fourth voltage to the third voltage.

The third resonator 450C, in one cycle of the driving waveform, may be applied with AC voltage so as to have a fifth section (stick section) having a fifth length and a sixth section (slip section) having a sixth length. Here, the fifth length may be substantially the same as the first length, the sixth length may be substantially the same as the second length, and the fifth length may be greater than the sixth length (e.g., fifth length: sixth length = 7:3). The applied voltage may perform a transition, in the fifth section, from fifth voltage of first signage (e.g., positive) to sixth voltage of second signage (e.g., negative) that is opposite to the first signage and perform a transition, in the sixth section, from the sixth voltage to the fifth voltage.

The fourth resonator 450D, in one cycle of the driving waveform, may be applied with AC voltage so as to have a seventh section having a seventh length and an eighth section having an eighth length. Here, the seventh length may be substantially the same as the third length, the eighth length may be substantially the same as the fourth length, and the seventh length may be substantially the same as the eighth length (e.g., seventh length: eighth length = 5:5). The applied voltage may perform a transition, in the seventh section, from seventh voltage of second signage (e.g., negative) to eighth voltage of first signage (e.g., positive) that is opposite to the second signage and perform a transition, in the eighth section, from the eighth voltage to the seventh voltage.

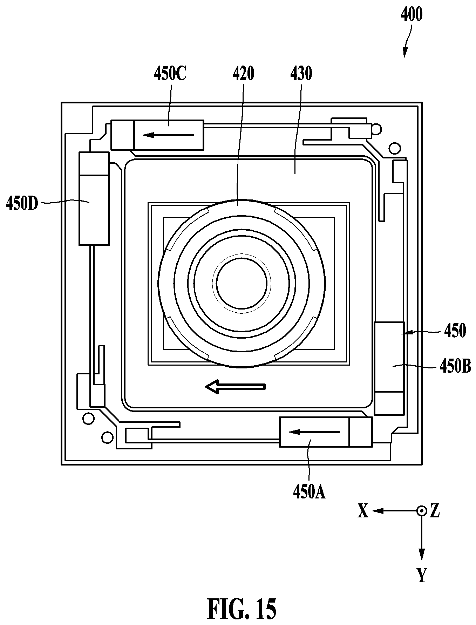

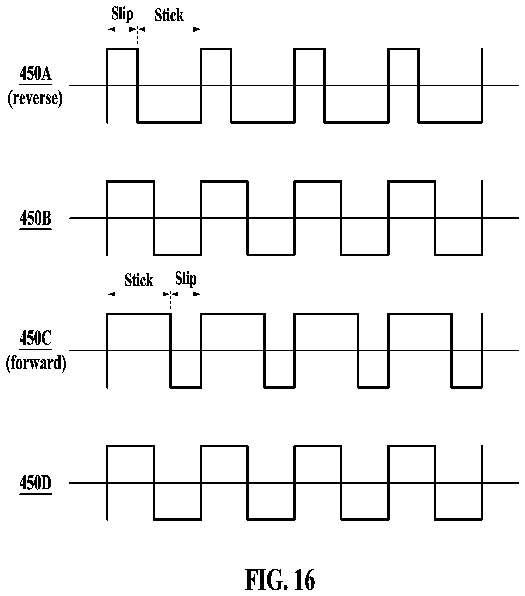

FIG. 15 is a diagram illustrating an image sensor shifting in a direction that is opposite to a first direction, according to an embodiment of the disclosure. FIG. 16 is a graph illustrating a voltage driving waveform applied to the first piezoelectric actuator of FIG. 15, according to an embodiment of the disclosure.

Referring to FIGS. 15 and 16, the camera module 400 may include the lens assembly 420, the image sensor 430, and the first piezoelectric actuator 450. The first piezoelectric actuator 450 may cause the lens assembly 420 or the image sensor 430 to shift in a direction (e.g., a +X direction) that is opposite to a first direction (e.g., a -X direction) that is substantially orthogonal to an optical axis (e.g., a Z-axis) in a slip-and-stick manner by a difference in the extension vibration speed and the contraction vibration speed of a vibrator. The first piezoelectric actuator 450 may be controlled by a PWM.

The first resonator 450A, in one cycle of a driving waveform, may be applied with AC voltage so as to have a first section (slip section) having first voltage and a first length and a second section (stick section) having second voltage and a second length. Here, the first voltage and the second voltage may have substantially the same magnitude and opposite potentials (e.g., the first voltage has first signage (e.g., positive) and the second voltage has second signage (e.g., negative) that is opposite to the first signage). The second length may be greater than the first length (e.g., first length: second length = 3:7).

The second resonator 450B, in one cycle of the driving waveform, may be applied with AC voltage so as to have a third section having third voltage and a third length and a fourth section having fourth voltage and a fourth length. Here, the third voltage and the fourth voltage may have substantially the same magnitude and opposite potentials (e.g., the third voltage has first signage (e.g., positive) and the fourth voltage has second signage (e.g., negative) that is opposite to the first signage). The third length may be substantially the same as the fourth length (e.g., third length: fourth length = 5:5).

The third resonator 450C, in one cycle of the driving waveform, may be applied with AC voltage so as to have a fifth section (stick section) having fifth voltage and a fifth length and a sixth section (slip section) having sixth voltage and a sixth length. Here, the fifth voltage and the sixth voltage may have substantially the same magnitude and opposite potentials (e.g., the fifth voltage has first signage (e.g., positive) and the sixth voltage has second signage (e.g., negative) that is opposite to the first signage). The fifth length may be substantially the same as the second length, the sixth length may be substantially the same as the first length, and the sixth length may be less than the fifth length (e.g., fifth length: sixth length = 7:3).

The fourth resonator 450D, in one cycle of the driving waveform, may be applied with AC voltage so as to have a seventh section having seventh voltage and a seventh length and an eighth section having eighth voltage and an eighth length. Here, the seventh voltage and the eighth voltage may have substantially the same magnitude and opposite potentials (e.g., the seventh voltage has first signage (e.g., positive) and the eighth voltage has second signage (e.g., negative) that is opposite to the first signage). The seventh length may be substantially the same as the third length, the eighth length may be substantially the same as the fourth length, and the seventh length may be substantially the same as the eighth length (e.g., seventh length: eighth length = 5:5).

In an embodiment not shown, the first piezoelectric actuator 450 may operate only two resonators (e.g., the first resonator 450A and the third resonator 450C) among the plurality of resonators and may not operate the remaining two resonators (e.g., the second resonator 450B and the fourth resonator 450D). For example, voltage of substantially 0V may be applied to the second resonator 450B and the fourth resonator 450D.

In an embodiment not shown, the first piezoelectric actuator 450 may cause the lens assembly 420 or the image sensor 430 to shift in the first direction (e.g., a -X direction) that is substantially orthogonal to the optical axis (e.g., a Z-axis) or in a direction (e.g., a +X direction) that is opposite thereto with any suitable driving waveform.

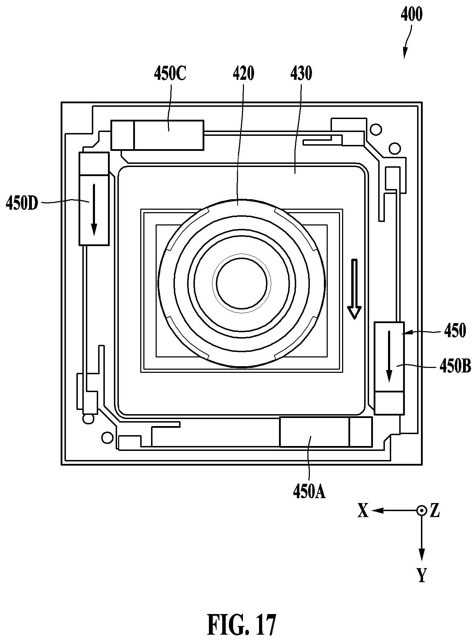

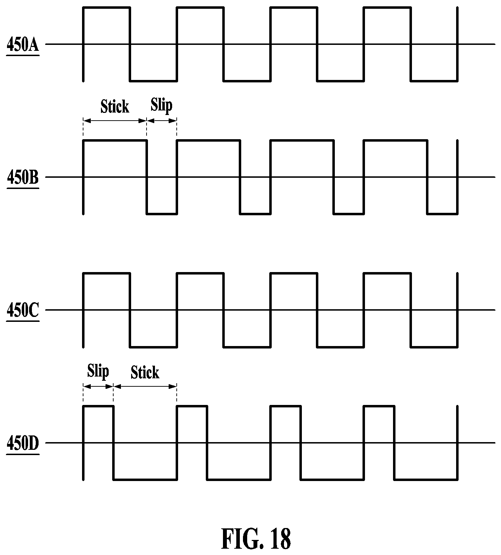

FIG. 17 is a diagram illustrating an image sensor shifting in a second direction that is substantially orthogonal to an optical axis and a first direction, according to an embodiment of the disclosure. FIG. 18 is a graph illustrating a voltage driving waveform applied to the first piezoelectric actuator 450 of FIG. 17, according to an embodiment of the disclosure.

Referring to FIGS. 17 and 18, the camera module 400 may include the lens assembly 420, the image sensor 430, and the first piezoelectric actuator 450. The first piezoelectric actuator 450 may cause the lens assembly 420 or the image sensor 430 to shift in a second direction (e.g., a +Y direction) that is substantially orthogonal to each of an optical axis (e.g., a Z-axis) and a first direction (e.g., a +X direction) that is substantially orthogonal to the optical axis (e.g., a Z-axis) in a slip-and-stick manner by a difference in the extension vibration speed and the contraction vibration speed of a vibrator. For example, the first piezoelectric actuator 450 may be controlled by a PWM.

The first resonator 450A, in one cycle of a driving waveform, may be applied with AC voltage so as to have a first section having first voltage and a first length and a second section having second voltage and a second length. Here, the first voltage and the second voltage may have substantially the same magnitude and opposite potentials (e.g., the first voltage has first signage (e.g., positive) and the second voltage has second signage (e.g., negative) that is opposite to the first signage). The first length may be substantially the same as the second length (e.g., first length: second length = 5:5).

The second resonator 450B, in one cycle of the driving waveform, may be applied with AC voltage so as to have a third section (stick section) having third voltage and a third length and a fourth section (slip section) having fourth voltage and a fourth length. Here, the third voltage and the fourth voltage may have substantially the same magnitude and opposite potentials (e.g., the third voltage has first signage (e.g., positive) and the fourth voltage has second signage (e.g., negative) that is opposite to the first signage). The fourth length may be less than the third length (e.g., third length: fourth length = 7:3).

The third resonator 450C, in one cycle of the driving waveform, may be applied with AC voltage so as to have a fifth section having fifth voltage and a fifth length and a sixth section having sixth voltage and a sixth length. Here, the fifth voltage and the sixth voltage may have substantially the same magnitude and opposite potentials (e.g., the fifth voltage has first signage (e.g., positive) and the sixth voltage has second signage (e.g., negative) that is opposite to the first signage). The fifth length may be substantially the same as the first length, the sixth length may be substantially the same as the second length, and the fifth length may be substantially the same as the sixth length (e.g., fifth length: sixth length = 5:5).

The fourth resonator 450D, in one cycle of the driving waveform, may be applied with AC voltage so as to have a seventh section (slip section) having seventh voltage and a seventh length and an eighth section (stick section) having eighth voltage and an eighth length. Here, the seventh voltage and the eighth voltage may have substantially the same magnitude and opposite potentials (e.g., the seventh voltage has first signage (e.g., positive) and the eighth voltage has second signage (e.g., negative) that is opposite to the first signage). The seventh length may be substantially the same as the fourth length, the eighth length may be substantially the same as the third length, and the eighth length may be greater than the seventh length (e.g., the seventh length: the eighth length = 3:7).

In an embodiment not shown, the first piezoelectric actuator 450 may operate only two resonators (e.g., the second resonator 450B and the fourth resonator 450D) among the plurality of resonators and may not operate the remaining two resonators (e.g., the first resonator 450A and the third resonator 450C). For example, voltage of substantially 0V may be applied to the first resonator 450A and the third resonator 450C.

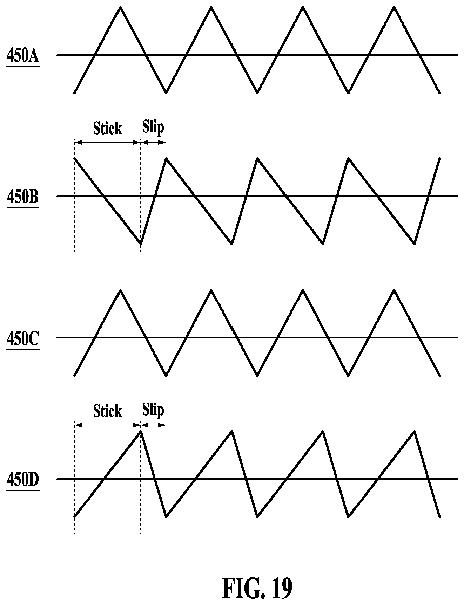

FIG. 19 is a graph illustrating a voltage driving waveform applied to the first piezoelectric actuator of FIG. 17, according to an embodiment of the disclosure.

Referring to FIG. 19, the first piezoelectric actuator 450 may use a triangular driving waveform to cause the lens assembly 420 or the image sensor 430 to shift in a second direction (e.g., a +Y direction) that is orthogonal to each of an optical axis (e.g., a Z-axis) and a first direction (e.g., a +X direction) that is substantially orthogonal to the optical axis.

For example, the first resonator 450A, in one cycle of a driving waveform, may be applied with AC voltage so as to have a first section having a first length and a second section having a second length. Here, the second length may be substantially the same as the second length (e.g., first length: second length = 5:5). The applied voltage may perform a transition, in the first section, from first voltage of second signage (e.g., negative) to second voltage of first signage (e.g., positive) that is opposite to the second signage and perform a transition, in the second section, from the second voltage to the first voltage.

The second resonator 450B, in one cycle of the driving waveform, may be applied with AC voltage so as to have a third section (stick section) having a third length and a fourth section (slip section) having a fourth length. Here, the third length may be greater than the fourth length (e.g., third length: fourth length = 7:3). The applied voltage may perform a transition, in the third section, from third voltage of first signage (e.g., positive) to fourth voltage of second signage (e.g., negative) that is opposite to the first signage and perform a transition, in the second section, from the fourth voltage to the third voltage.

The third resonator 450C, in one cycle of the driving waveform, may be applied with AC voltage so as to have a fifth section having a fifth length and a sixth section having a sixth length. Here, the fifth length may be substantially the same as the first length, the sixth length may be substantially the same as the second length, and the fifth length may be substantially the same as the sixth length (e.g., fifth length: sixth length = 5:5). The applied voltage may perform a transition, in the fifth section, from fifth voltage of second signage (e.g., negative) to sixth voltage of first signage (e.g., positive) that is opposite to the second signage and perform a transition, in the sixth section, from the sixth voltage to the fifth voltage.

The fourth resonator 450D, in one cycle of the driving waveform, may be applied with AC voltage so as to have a seventh section (stick section) having a seventh length and an eighth section (slip section) having an eighth length. Here, the seventh length may be substantially the same as the third length, the eighth length may be substantially the same as the fourth length, and the seventh length may be greater than the eighth length (e.g., seventh length: eighth length = 7:3). The applied voltage may perform a transition, in the seventh section, from seventh voltage of second signage (e.g., negative) to eighth voltage of first signage (e.g., positive) that is opposite to the second signage and perform a transition, in the eighth section, from the eighth voltage to the seventh voltage.

In an embodiment not shown, the first piezoelectric actuator 450 may operate only two resonators (e.g., the second resonator 450B and the fourth resonator 450D) among the plurality of resonators and may not operate the remaining two resonators (e.g., the first resonator 450A and the third resonator 450C). For example, voltage of substantially 0V may be applied to the first resonator 450A and the third resonator 450C.

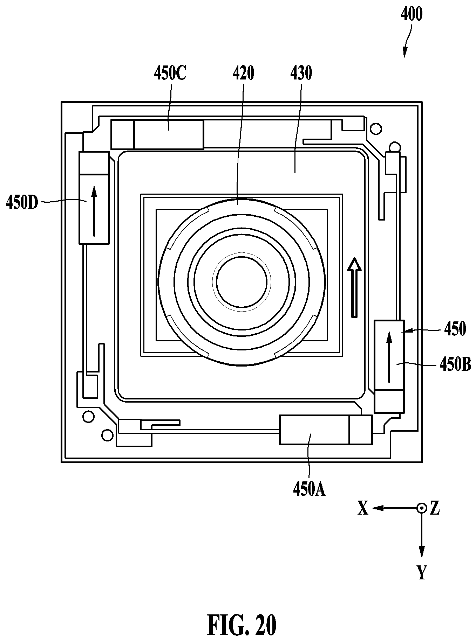

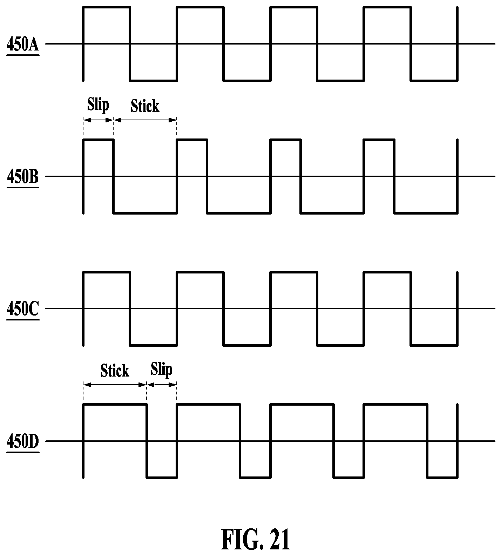

FIG. 20 is a diagram illustrating an image sensor shifting in a direction that is opposite to a second direction, according to an embodiment of the disclosure. FIG. 21 is a graph illustrating a voltage driving waveform applied to the first piezoelectric actuator of FIG. 20, according to an embodiment of the disclosure.

Referring to FIGS. 20 and 21, the camera module 400 may include the lens assembly 420, the image sensor 430, and the first piezoelectric actuator 450. The first piezoelectric actuator 450 may cause the lens assembly 420 or the image sensor 430 to shift in a direction (e.g., a -Y direction) that is opposite to a second direction (e.g., a +Y direction) that is substantially orthogonal to each of an optical axis (e.g., a Z-axis) and a first direction (e.g., a +X direction) that is substantially orthogonal to the optical axis in a slip-and-stick manner by a difference in the extension vibration speed and the contraction vibration speed of a vibrator. The first piezoelectric actuator 450 may be controlled by a PWM.

The first resonator 450A, in one cycle of a driving waveform, may be applied with AC voltage so as to have a first section having first voltage and a first length and a second section having second voltage and a second length. Here, the first voltage and the second voltage may have substantially the same magnitude and opposite potentials (e.g., the first voltage has first signage (e.g., positive) and the second voltage has second signage (e.g., negative) that is opposite to the first signage). The first length may be substantially the same as the first length (e.g., first length: first length = 5:5).

The second resonator 450B, in one cycle of the driving waveform, may be applied with AC voltage so as to have a third section (slip section) having third voltage and a third length and a fourth section (stick section) having fourth voltage and a fourth length. Here, the third voltage and the fourth voltage may have substantially the same magnitude and opposite potentials (e.g., the third voltage has first signage (e.g., positive) and the fourth voltage has second signage (e.g., negative) that is opposite to the first signage). The fourth length may be greater than the third length (e.g., third length: fourth length = 3:7).

The third resonator 450C, in one cycle of the driving waveform, may be applied with AC voltage so as to have a fifth section having fifth voltage and a fifth length and a sixth section having sixth voltage and a sixth length. Here, the fifth voltage and the sixth voltage may have substantially the same magnitude and opposite potentials (e.g., the fifth voltage has first signage (e.g., positive) and the sixth voltage has second signage (e.g., negative) that is opposite to the first signage). The fifth length may be substantially the same as the first length, the sixth length may be substantially the same as the second length, and the fifth length may be substantially the same as the sixth length (e.g., fifth length: sixth length = 5:5).

The fourth resonator 450D, in one cycle of the driving waveform, may be applied with AC voltage so as to have a seventh section (stick section) having seventh voltage and a seventh length and an eighth section (slip section) having eighth voltage and an eighth length. Here, the seventh voltage and the eighth voltage may have substantially the same magnitude and opposite potentials (e.g., the seventh voltage has first signage (e.g., positive) and the eighth voltage has second signage (e.g., negative) that is opposite to the first signage). The seventh length may be substantially the same as the fourth length, the eighth length may be substantially the same as the third length, and the eighth length may be less than the seventh length (e.g., seventh length: eighth length = 7:3).

In an embodiment not shown, the first piezoelectric actuator 450 may operate only two resonators (e.g., the second resonator 450B and the fourth resonator 450D) among the plurality of resonators and may not operate the remaining two resonators (e.g., the first resonator 450A and the third resonator 450C). For example, voltage of substantially 0V may be applied to the first resonator 450A and the third resonator 450C.

In an embodiment not shown, the first piezoelectric actuator 450 may cause the lens assembly 420 or the image sensor 430 to shift in the second direction (e.g., a +Y direction) that is substantially orthogonal to each of the optical axis (e.g., a Z-axis) and the first direction (e.g., a +X direction) that is substantially orthogonal to the optical axis or in a direction (e.g., a -Y direction) that is opposite thereto with any suitable driving waveform.

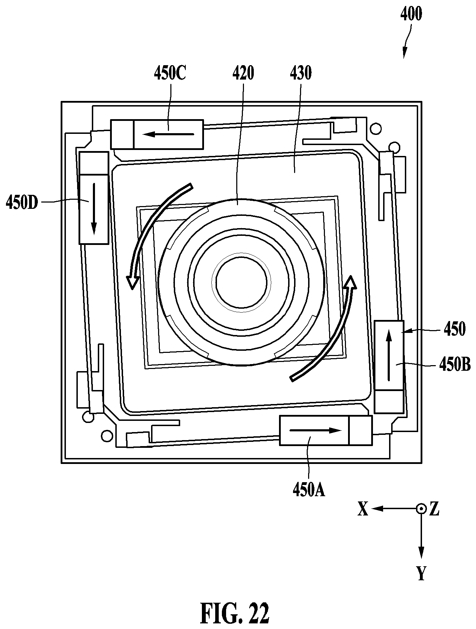

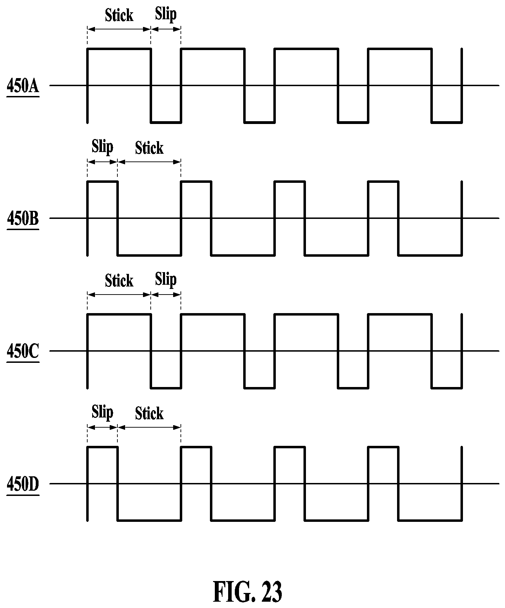

FIG. 22 is a diagram illustrating an image sensor rolling in a first rotational direction with respect to an optical axis, according to an embodiment of the disclosure. FIG. 23 is a graph illustrating a voltage driving waveform applied to the first piezoelectric actuator of FIG. 22, according to an embodiment of the disclosure.

Referring to FIGS. 22 and 23, the camera module 400 may include the lens assembly 420, the image sensor 430, and the first piezoelectric actuator 450. The first piezoelectric actuator 450 may cause the lens assembly 420 or the image sensor 430 to roll in a first rotational direction (e.g., a counterclockwise direction of FIG. 22) with respect to an optical axis (e.g., a Z-axis) in a slip-and-stick manner by a difference in the extension vibration speed and the contraction vibration speed of a vibrator. For example, the first piezoelectric actuator 450 may be controlled by a PWM.

The first resonator 450A, in one cycle of a driving waveform, may be applied with AC voltage so as to have a first section (stick section) having first voltage and a first length and a second section (slip section) having second voltage and a second length. Here, the first voltage and the second voltage may have substantially the same magnitude and opposite potentials (e.g., the first voltage has first signage (e.g., positive) and the second voltage has second signage (e.g., negative) that is opposite to the first signage). The second length may be less than the first length (e.g., first length: second length = 7:3).

The second resonator 450B, in one cycle of the driving waveform, may be applied with AC voltage so as to have a third section (slip section) having third voltage and a third length and a fourth section (stick section) having fourth voltage and a fourth length. Here, the third voltage and the fourth voltage may have substantially the same magnitude and opposite potentials (e.g., the third voltage has first signage (e.g., positive) and the fourth voltage has second signage (e.g., negative) that is opposite to the first signage). The third length may be substantially the same as the second length, the fourth length may be substantially the same as the first length, and the fourth length may be greater than the third length (e.g., third length: fourth length = 3:7).

The third resonator 450C, in one cycle of the driving waveform, may be supplied with AC voltage so as to have a fifth section (stick section) having fifth voltage and a fifth length and a sixth section (slip section) having sixth voltage and a sixth length. Here, the fifth voltage and the sixth voltage may have substantially the same magnitude and opposite potentials (e.g., the fifth voltage has first signage (e.g., positive) and the sixth voltage has second signage (e.g., negative) that is opposite to the first signage). The fifth length may be substantially the same as the first length, the sixth length may be substantially the same as the second length, and the sixth length may be less than the fifth length (e.g., fifth length: sixth length = 7:3).

The fourth resonator 450D, in one cycle of the driving waveform, may be applied with AC voltage so as to have a seventh section (slip section) having seventh voltage and a seventh length and an eighth section (stick section) having eighth voltage and an eighth length. Here, the seventh voltage and the eighth voltage may have substantially the same magnitude and opposite potentials (e.g., the seventh voltage has first signage (e.g., positive) and the eighth voltage has second signage (e.g., negative) that is opposite to the first signage). The seventh length may be substantially the same as the sixth length, the eighth length may be substantially the same as the fifth length, and the eighth length may be greater than the seventh length (e.g., the seventh length: the eighth length = 3:7).

In an embodiment not shown, the first piezoelectric actuator 450 may operate only two resonators among the plurality of resonators and may not operate the remaining two resonators. In an example, AC voltage may be applied to each of the first resonator 450A and the second resonator 450B, and voltage of substantially 0V may be applied to each of the third resonator 450C and the fourth resonator 450D. In an example, voltage of substantially 0V may be applied to the first resonator 450A and the second resonator 450B, and AC voltage may be applied to each of the third resonator 450C and the fourth resonator 450D. In an example, AC voltage may be applied to each of the first resonator 450A and the third resonator 450C, and voltage of substantially 0V may be applied to each of the second resonator 450B and the fourth resonator 450D. In an example, AC voltage may be applied to each of the second resonator 450B and the fourth resonator 450D, and voltage of substantially 0V may be applied to each of the first resonator 450A and the third resonator 450C.

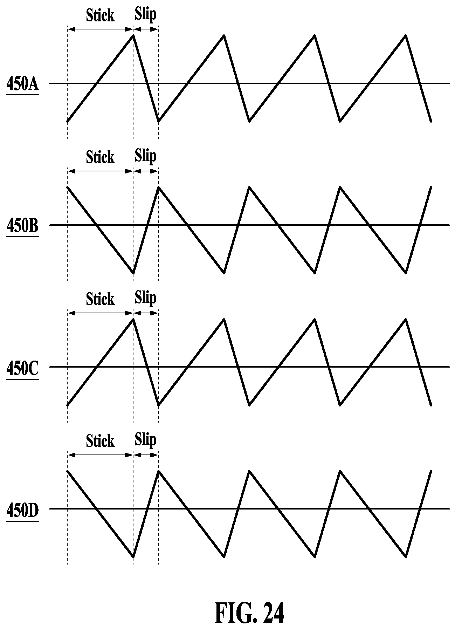

FIG. 24 is a graph illustrating a voltage driving waveform applied to the first piezoelectric actuator of FIG. 21, according to an embodiment of the disclosure.

Referring to FIG. 24, the first piezoelectric actuator 450 may use a triangular driving waveform to cause the lens assembly 420 or the image sensor 430 to roll in a first rotational direction (e.g., a counterclockwise direction of FIG. 22) with respect to an optical axis (e.g., a Z-axis).

The first resonator 450A, in one cycle of a driving waveform, may be applied with AC voltage so as to have a first section (stick section) having a first length and a second section (slip section) having a second length. Here, the first length may be greater than the second length (e.g., first length: second length = 7:3). The applied voltage may perform a transition, in the first section, from first voltage of second signage (e.g., negative) to second voltage of first signage (e.g., positive) that is opposite to the second signage and perform a transition, in the second section, from the second voltage to the first voltage.

The second resonator 450B, in one cycle of the driving waveform, may be applied with AC voltage so as to have a third section (stick section) having a third length and a fourth section (slip section) having a fourth length. Here, the third length may be substantially the same as the first length, the fourth length may be substantially the same as the second length, and the fourth length may be less than the third length (e.g., third length: fourth length = 7:3). The applied voltage may perform a transition, in the third section, from third voltage of first signage (e.g., positive) to fourth voltage of second signage (e.g., negative) that is opposite to the first signage and perform a transition, in the fourth section, from the fourth voltage to the third voltage.

The third resonator 450C, in one cycle of the driving waveform, may be applied with AC voltage so as to have a fifth section (stick section) having a fifth length and a sixth section (slip section) having a sixth length. Here, the fifth length may be substantially the same as the first length, the sixth length may be substantially the same as the second length, and the sixth length may be less than the fifth length (e.g., fifth length: sixth length = 7:3). The applied voltage may perform a transition, in the fifth section, from fifth voltage of second signage (e.g., negative) to sixth voltage of first signage (e.g., positive) that is opposite to the second signage and perform a transition, in the sixth section, from the sixth voltage to the fifth voltage.

The fourth resonator 450D, in one cycle of the driving waveform, may be applied with AC voltage so as to have a seventh section (stick section) having a seventh length and an eighth section (slip section) having an eighth length. Here, the seventh length may be substantially the same as the fifth length, the eighth length may be substantially the same as the sixth length, and the eighth length may be less than the seventh length (e.g., seventh length: eighth length = 7:3). The applied voltage may perform a transition, in the seventh section, from seventh voltage of first signage (e.g., positive) to eighth voltage of second signage (e.g., negative) that is opposite to the first signage and perform a transition, in the eighth section, from the eighth voltage to the seventh voltage.

In an embodiment not shown, the first piezoelectric actuator 450 may cause the lens assembly 420 or the image sensor 430 to roll in the first rotational direction (e.g., a counterclockwise direction of FIG. 22) with respect to the optical axis (e.g., a Z-axis) with any suitable driving waveform.

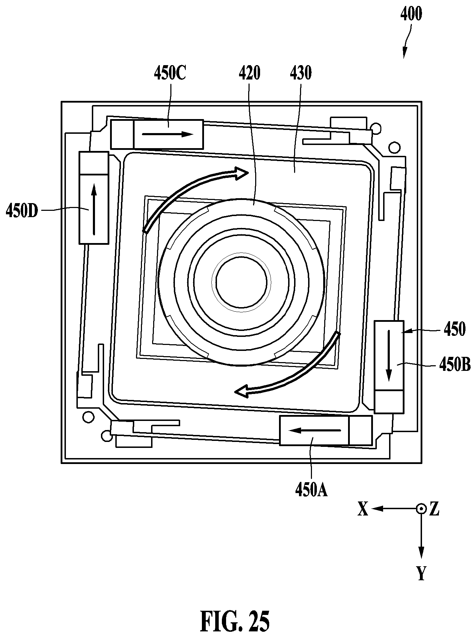

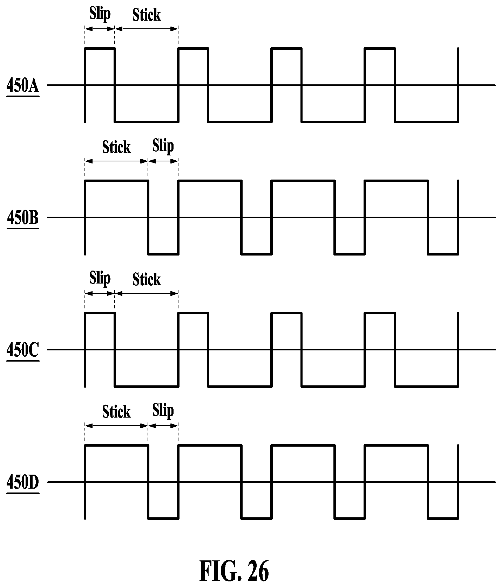

FIG. 25 is a diagram illustrating an image sensor rolling in a second rotational direction that is opposite to a first rotational direction with respect to an optical axis, according to an embodiment of the disclosure. FIG. 26 is a graph illustrating a voltage driving waveform applied to the first piezoelectric actuator 450 of FIG. 25, according to an embodiment of the disclosure.

Referring to FIGS. 25 and 26, the camera module 400 may include the lens assembly 420, the image sensor 430, and the first piezoelectric actuator 450. The first piezoelectric actuator 450 may cause the lens assembly 420 or the image sensor 430 to roll in a second rotational direction (e.g., a clockwise direction of FIG. 25) with respect to an optical axis (e.g., a Z-axis) in a slip-stick manner by a difference in the extension vibration speed and the contraction vibration speed of a vibrator. For example, the first piezoelectric actuator 450 may be controlled by a PWM.

The first resonator 450A, in one cycle of a driving waveform, may be applied with AC voltage so as to have a first section (slip section) having first voltage and a first length and a second section (stick section) having second voltage and a second length. Here, the first voltage and the second voltage may have substantially the same magnitude and opposite potentials (e.g., the first voltage has first signage (e.g., positive) and the second voltage has second signage (e.g., negative) that is opposite to the first signage). The second length may be greater than the first length (e.g., first length: second length = 3:7).

The second resonator 450B, in one cycle of the driving waveform, may be applied with AC voltage so as to have a third section (stick section) having third voltage and a third length and a fourth section (slip section) having fourth voltage and a fourth length. Here, the third voltage and the fourth voltage may have substantially the same magnitude and opposite potentials (e.g., the third voltage has first signage (e.g., positive) and the fourth voltage has second signage (e.g., negative) that is opposite to the first signage). The third length may be substantially the same as the second length, the fourth length may be substantially the same as the first length, and the fourth length may be less than the third length (e.g., third length: fourth length = 7:3).

The third resonator 450C, in one cycle of the driving waveform, may be applied with AC voltage so as to have a fifth section (slip section) having fifth voltage and a fifth length and a sixth section (stick section) having sixth voltage and a sixth length. Here, the fifth voltage and the sixth voltage may have substantially the same magnitude and opposite potentials (e.g., the fifth voltage has first signage (e.g., positive) and the sixth voltage has second signage (e.g., negative) that is opposite to the first signage). The fifth length may be substantially the same as the first length, the sixth length may be substantially the same as the second length, and the sixth length may be greater than the fifth length (e.g., fifth length: sixth length = 3:7).

The fourth resonator 450D, in one cycle of the driving waveform, may be applied with AC voltage so as to have a seventh section (stick section) having seventh voltage and a seventh length and an eighth section (slip section) having eighth voltage and an eighth length. Here, the seventh voltage and the eighth voltage may have substantially the same magnitude and opposite potentials (e.g., the seventh voltage has first signage (e.g., positive) and the eighth voltage has second signage (e.g., negative) that is opposite to the first signage). The seventh length may be substantially the same as the sixth length, the eighth length may be substantially the same as the fifth length, and the eighth length may be less than the seventh length (e.g., the seventh length: the eighth length = 7:3).

In an embodiment not shown, the first piezoelectric actuator 450 may operate only two resonators among the plurality of resonators and may not operate the remaining two resonators. In an example, AC voltage may be applied to each of the first resonator 450A and the second resonator 450B, and voltage of substantially 0V may be applied to each of the third resonator 450C and the fourth resonator 450D. In an example, voltage of substantially 0V may be applied to the first resonator 450A and the second resonator 450B, and AC voltage may be applied to each of the third resonator 450C and the fourth resonator 450D. In an example, AC voltage may be applied to each of the first resonator 450A and the third resonator 450C, and voltage of substantially 0V may be applied to each of the second resonator 450B and the fourth resonator 450D. In an example, AC voltage may be applied to each of the second resonator 450B and the fourth resonator 450D, and voltage of substantially 0V may be applied to each of the first resonator 450A and the third resonator 450C.

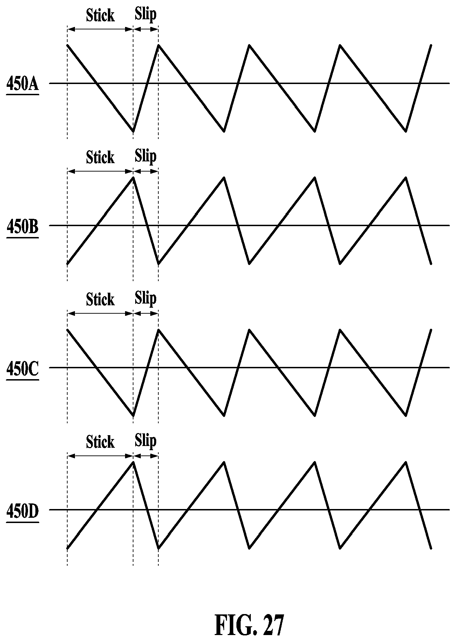

FIG. 27 is a graph illustrating a voltage driving waveform applied to the first piezoelectric actuator of FIG. 24, according to an embodiment of the disclosure.

Referring to FIG. 27, the first piezoelectric actuator 450 may use a triangular driving waveform to cause the lens assembly 420 or the image sensor 430 to roll in a second rotational direction (e.g., a clockwise direction of FIG. 25) with respect to an optical axis (e.g., a Z-axis).

The first resonator 450A, in one cycle of a driving waveform, may be applied with AC voltage so as to have a first section (stick section) having a first length and a second section (slip section) having a second length. Here, the first length may be greater than the second length (e.g., first length: second length = 7:3). The applied voltage may perform a transition, in the first section, from first voltage of first signage (e.g., positive) to second voltage of second signage (e.g., negative) that is opposite to the first signage and perform a transition, in the second section, from the second voltage to the first voltage.

The second resonator 450B, in one cycle of the driving waveform, may be applied with AC voltage so as to have a third section (stick section) having a third length and a fourth section (slip section) having a fourth length. Here, the third length may be substantially the same as the first length, the fourth length may be substantially the same as the second length, and the fourth length may be less than the third length (e.g., third length: fourth length = 7:3). The applied voltage may perform a transition, in the third section, from third voltage of second signage (e.g., negative) to fourth voltage of first signage (e.g., positive) that is opposite to the second signage and perform a transition, in the fourth section, from the fourth voltage to the third voltage.

The third resonator 450C, in one cycle of the driving waveform, may be applied with AC voltage so as to have a fifth section (stick section) having a fifth length and a sixth section (slip section) having a sixth length. Here, the fifth length may be substantially the same as the first length, the sixth length may be substantially the same as the second length, and the sixth length may be less than the fifth length (e.g., fifth length: sixth length = 7:3). The applied voltage may perform a transition, in the fifth section, from fifth voltage of first signage (e.g., positive) to sixth voltage of second signage (e.g., negative) that is opposite to the first signage and perform a transition, in the sixth section, from the sixth voltage to the fifth voltage.

The fourth resonator 450D, in one cycle of the driving waveform, may be applied with AC voltage so as to have a seventh section (stick section) having a seventh length and an eighth section (slip section) having an eighth length. Here, the seventh length may be substantially the same as the fifth length, the eighth length may be substantially the same as the sixth length, and the eighth length may be less than the seventh length (e.g., seventh length: eighth length = 7:3). The applied voltage may perform a transition, in the seventh section, from seventh voltage of second signage (e.g., negative) to eighth voltage of first signage (e.g., positive) that is opposite to the second signage and perform a transition, in the eighth section, from the eighth voltage to the seventh voltage.

In an embodiment not shown, the first piezoelectric actuator 450 may cause the lens assembly 420 or the image sensor 430 to roll in the second rotational direction (e.g., a clockwise direction of FIG. 25) with respect to the optical axis (e.g., a Z-axis) with any suitable driving waveform.

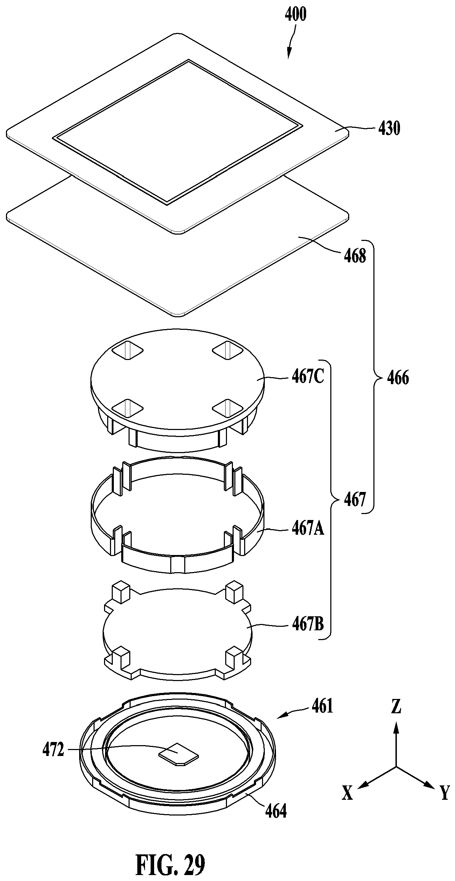

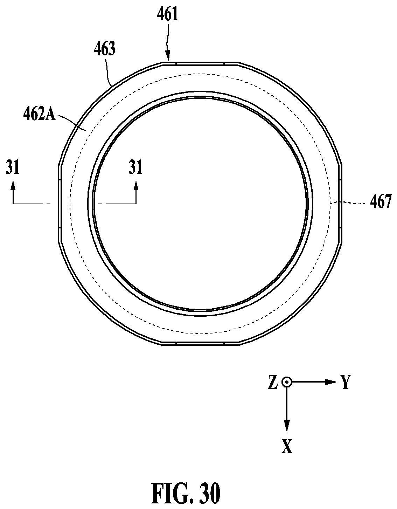

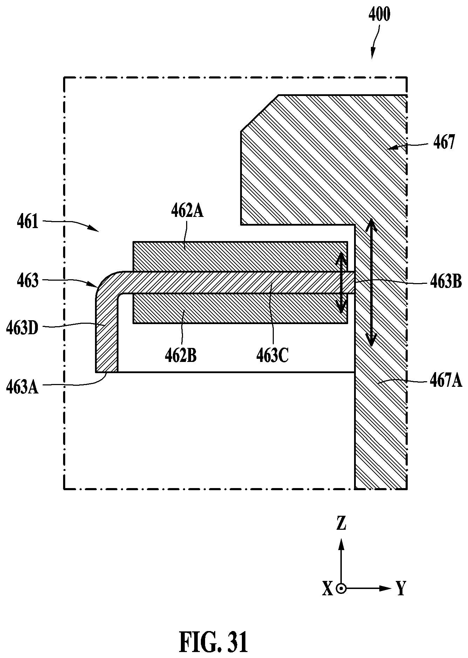

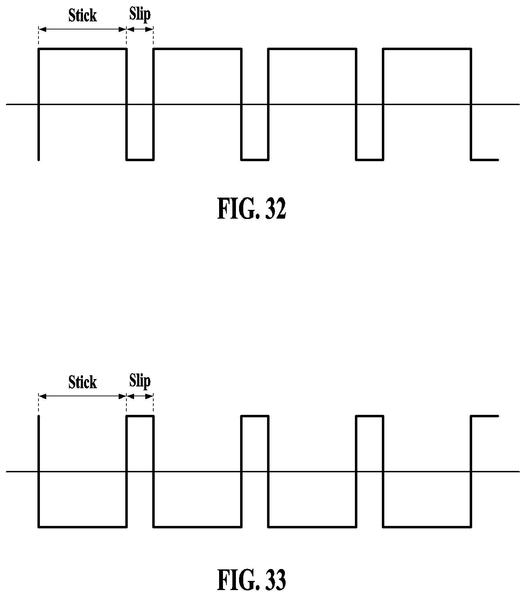

FIG. 28 is a perspective view of an image sensor and the second piezoelectric actuator 460, according to an embodiment of the disclosure. FIG. 29 is an exploded perspective view of the image sensor and the second piezoelectric actuator 460, according to an embodiment of the disclosure. FIG. 30 is a plan view of the fifth resonator 461 of FIG. 29, according to an embodiment of the disclosure. FIG. 31 is a cross-sectional view taken along line 31-31 of the second piezoelectric actuator 460 of FIG. 30, according to an embodiment of the disclosure. FIG. 32 is a graph illustrating a voltage driving waveform applied to the second piezoelectric actuator 460 of FIG. 28, according to an embodiment of the disclosure. FIG. 33 is a graph illustrating the voltage driving waveform applied to the second piezoelectric actuator 460 of FIG. 28, according to an embodiment of the disclosure.

Referring to FIGS. 28 to 33, the camera module 400 may include the image sensor 430 and the second piezoelectric actuator 460.

The second piezoelectric actuator 460 may include the fifth resonator 461. The fifth resonator 461 may generate power in a direction (e.g., a Z-axis direction) along the optical axis OA.

The fifth resonator 461 may include a fifth vibrator 462A configured to generate a vibration. The fifth resonator 461 may include a sixth vibrator 462B configured to generate a vibration. The fifth vibrator 462A and the sixth vibrator 462B may generate vibrations in a radial mode. The fifth vibrator 462A and the sixth vibrator 462B may be disposed opposite to each other. The fifth vibrator 462A and the sixth vibrator 462B may each include a piezoelectric material.

The fifth resonator 461 may include an elastic plate 463. The elastic plate 463 may include a first end portion 463A that functions as a fixed end portion, a second end portion 463B that functions as a free end portion, and an extension 463C extending between the first end portion 463A and the second end portion 463B.

The second end portion 463B, which may also be referred to as a "tip," may be displaced in a direction along an optical axis (e.g., a Z-axis) by a difference in length change in a radial direction (e.g., a Y-axis direction) according to pieces of voltage applied to the fifth vibrator 462A and the sixth vibrator 462B. For example, when 180-degree phase-inverted signals are applied to the fifth vibrator 462A and the sixth vibrator 462B while a ground potential is applied to the elastic plate 463, when one vibrator of the fifth vibrator 462A and the sixth vibrator 462B extends in the radial direction, the other vibrator may contract in the radial direction, and thus, the elastic plate 463 may be bent. The second end portion 463B of the elastic plate 463 may contact the carrier 467 and vibrate repeatedly in an optical axis direction (e.g., a Z-axis direction).

The extension 463C may have a substantially annular shape. The extension 463C may extend in a radial direction that is orthogonal to the optical axis OA. The annular structure of the elastic plate 463 may enable uniform transmission of driving force during an AF operation. The fifth vibrator 462A may be disposed in a first surface (e.g., a surface in a +Z direction) of the extension 463C, and the sixth vibrator 462B may be disposed in a second surface (e.g., a surface in a -Z direction) of the extension 463C, which is opposite the first surface.

The elastic plate 463 may include a skirt 463D extending in a direction that is substantially orthogonal to an extension direction of the extension 463C.

The fifth resonator 461 may include a support 464 configured to support the elastic plate 463. The support 464 may have a substantially annular shape.

The second piezoelectric actuator 460 may include the second moving body 466. The second moving body 466 may include the carrier 467 configured to carry the image sensor 430. The carrier 467 may include an elastic body 467A pressed by the second end portion 463B of the elastic plate 463. The elastic body 467A may be in contact with the second end portion 463B of the elastic plate 463. When vibration displacements occur in the fifth vibrator 462A and the sixth vibrator 462B, the second end portion 463B of the elastic plate 463 may move the carrier 467 in a direction (e.g., a Z-axis direction) along the optical axis.

The carrier 467 may include a first support 467B configured to support the elastic body 467A. The first support 467B may be disposed on a first side (e.g., a side in a -Z direction) of the elastic body 467A. The carrier 467 may include a second support 467C configured to support the elastic body 467A. The second support 467C may be coupled to the first support 467B. The second support 467C may be disposed on a second side (e.g., a side in a +Z direction) of the elastic body 467A, which is opposite to the first side.

The second moving body 466 may include a second moving plate 468. The second moving plate 468 may support the image sensor 430. The second moving plate 468 may have a substantially polygonal shape (e.g., a quadrangle shape). The second moving plate 468 may uniformly transmit power to the image sensor 430 during an AF operation.

The camera module 400 may include the second sensing magnet 472. The second sensing magnet 472 may be disposed in one surface (e.g., a surface in a -Z direction) of the first support 467B.

For the carrier 467 to move in the optical axis direction (e.g., a Z-axis direction), the extension vibration speed and the contraction vibration speed of the fifth vibrator 462A and the sixth vibrator 462B may be controlled by considering the inertia according to the weight of the carrier 467 and the stick-slip in a contact surface between the carrier 467 and the elastic plate 463 (e.g., a contact surface between the second end portion 463B and the elastic body 467A). The extension vibration speed and the contraction vibration speed of the fifth vibrator 462A and the sixth vibrator 462B may be changed by the duty setting of a PWM of an AC voltage signal applied to the fifth vibrator 462A and the sixth vibrator 462B. In a stick state in which the fifth vibrator 462A and the sixth vibrator 462B move substantially simultaneously with the carrier 467 (stick section of FIGS. 32 and 33), the deformation of the second end portion 463B may be performed at a reduced speed so that an increased vibration is transmitted. In a slip state in which the carrier 467 substantially stays at a predetermined position (slip section of FIGS. 32 and 33), as the fifth vibrator 462A and the sixth vibrator 462B deform relatively quickly with respect to the carrier 467, the carrier 467 may deviate from the predetermined position in the opposite direction. The carrier 467 may substantially move only in the stick section in which the fifth vibrator 462A and the sixth vibrator 462B deform at a relatively slow speed. For example, as illustrated in FIG. 32, a ground potential may be applied to the elastic plate 463 and AC voltage may be applied to one of the fifth vibrator 462A and the sixth vibrator 462B so as to have a stick section having a long section length (positive potential) and a slip section having a short section length (negative potential). For example, the fifth vibrator 462A contracting in a first radial direction (e.g., a -Y direction) and the sixth vibrator 462B expanding in a second radial direction (e.g., a +Y direction) that is opposite to the first radial direction may cause the carrier 467 to move in a first direction (e.g., a +Z direction) along the optical axis. Furthermore, as illustrated in FIG. 33, a ground potential may be applied to the elastic plate 463 and AC voltage may be applied to one of the fifth vibrator 462A and the sixth vibrator 462B so as to have a stick section having a long section length (negative potential) and a slip section having a short section length (positive potential). For example, the fifth vibrator 462A expanding in the second radial direction (e.g., a +Y direction) and the sixth vibrator 462B contracting in the first radial direction (e.g., a -Y direction) that is opposite to the first radial direction may cause the carrier 467 to move in a direction (e.g., a -Z direction) that is opposite to the first direction (e.g., a +Z direction) along the optical axis.

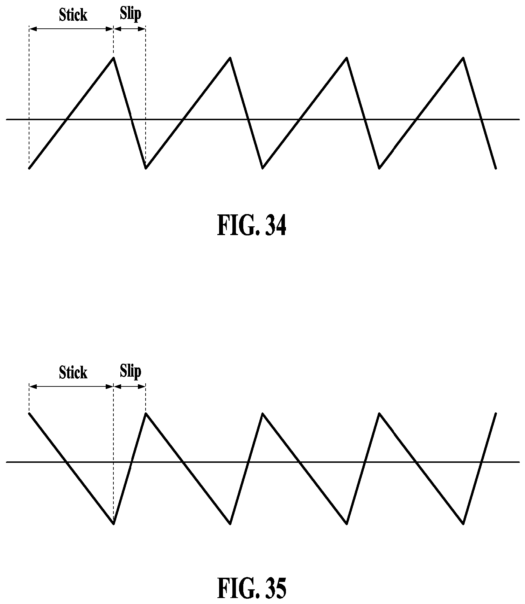

FIG. 34 is a graph illustrating a voltage driving waveform applied to the second piezoelectric actuator of FIG. 28, according to an embodiment of the disclosure. FIG. 35 is a graph illustrating the voltage driving waveform applied to the second piezoelectric actuator of FIG. 28, according to an embodiment of the disclosure.

Referring to FIGS. 34 and 35, AC voltage applied to the fifth vibrator 462A and the sixth vibrator 462B may have a triangular driving waveform.

For the carrier 467 to move in a first direction (e.g., a +Z direction) along an optical axis, as illustrated in FIG. 34, in one cycle of a driving waveform, AC voltage having a first section (stick section) having a first length and a second section (slip section) having a second length may be applied to one of the fifth vibrator 462A and the sixth vibrator 462B. Here, the first length may be greater than the second length. The applied voltage may perform a transition, in the first section, from first voltage of second signage (e.g., negative) to second voltage of first signage (e.g., positive) that is opposite to the second signage and perform a transition, in the second section, from the second voltage to the first voltage.

For the carrier 467 to move in a second direction (e.g., a -Z direction) that is opposite to the first direction (e.g., a +Z direction) along the optical axis, as illustrated in FIG. 35, in one cycle of the driving waveform, AC voltage having a third section (stick section) having a third length and a fourth section (slip section) having a fourth length may be applied to one of the fifth vibrator 462A and the sixth vibrator 462B. Here, the third length may be greater than the fourth length. The applied voltage may perform a transition, in the third section, from third voltage of first signage (e.g., positive) to fourth voltage of second signage (e.g., negative) that is opposite to the second signage and perform a transition, in the fourth section, from the second voltage to the first voltage.

In an embodiment not shown, AC voltage applied to the fifth vibrator 462A and the sixth vibrator 462B may have any suitable driving waveform.

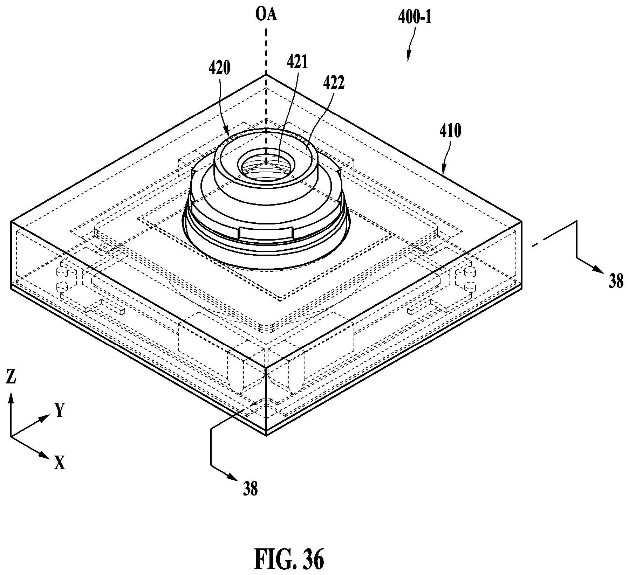

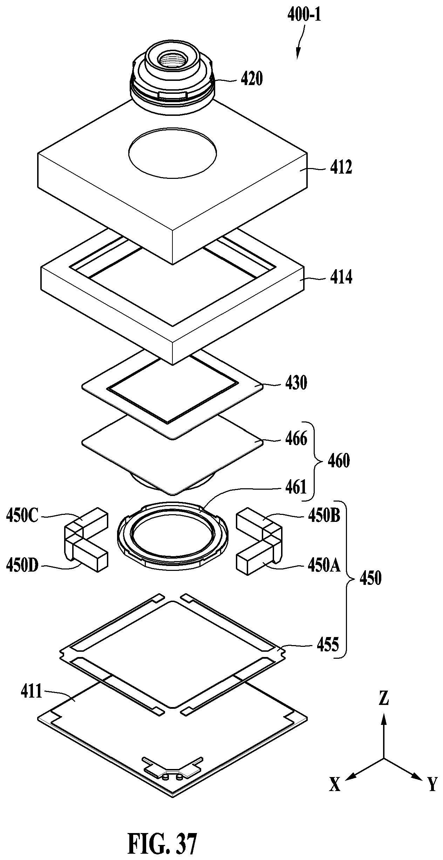

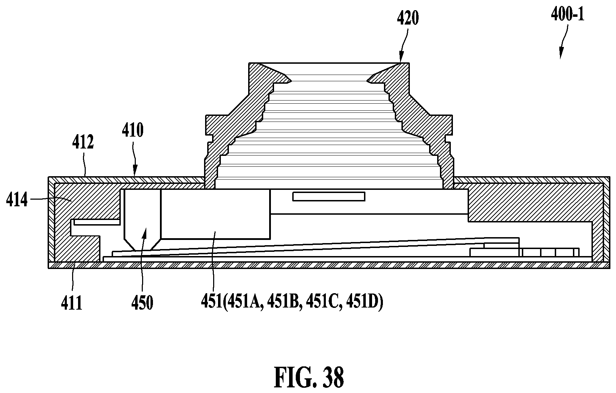

FIG. 36 is a perspective view of a camera module according to an embodiment of the disclosure. FIG. 37 is an exploded perspective view of the camera module according to an embodiment of the disclosure. FIG. 38 is a cross-sectional view taken along line 38-38 of the camera module of FIG. 36, according to an embodiment of the disclosure.

Referring to FIGS. 36 to 38, a camera module 400-1 (e.g., the camera module 180 of FIG. 1, the camera module 180 of FIG. 2, the second camera module 380B and/or the third camera module 380D of FIGS. 3 and 4, and/or the camera module 400 of FIGS. 5 to 35) may include the camera housing 410, the lens assembly 420, the image sensor 430, the first piezoelectric actuator 450, and the second piezoelectric actuator 460. The camera housing 410 may include the base 411 and the camera cover 412. The lens assembly 420 may include at least one lens 421 having the optical axis OA and the lens housing 422. The first piezoelectric actuator 450 may include the first resonator 450A, the second resonator 450B, the third resonator 450C, the fourth resonator 450D, and the first moving body 455. The second piezoelectric actuator 460 may include the fifth resonator 461 and the second moving body 466.

The camera housing 410 may include an inner cover 414. The inner cover 414 may fix a vibrator 451 (e.g., the first vibrator 451A, the second vibrator 451B, the third vibrator 451C, and/or the fourth vibrator 451D of FIGS. 5 to 35). The inner cover 414 may be disposed between the base 411 and the camera cover 412.

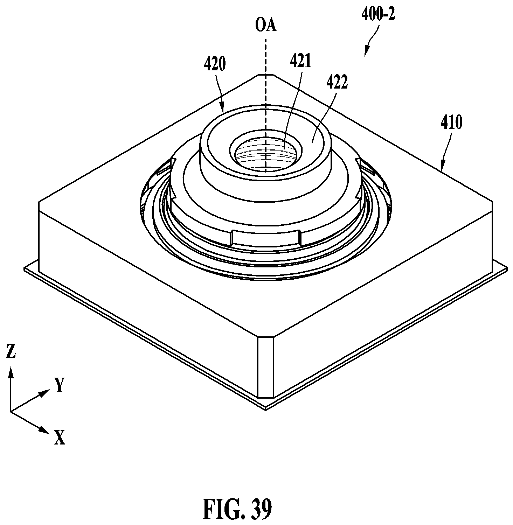

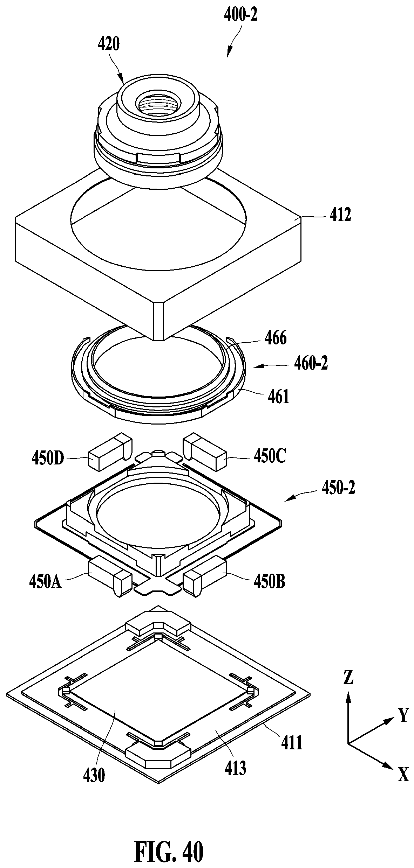

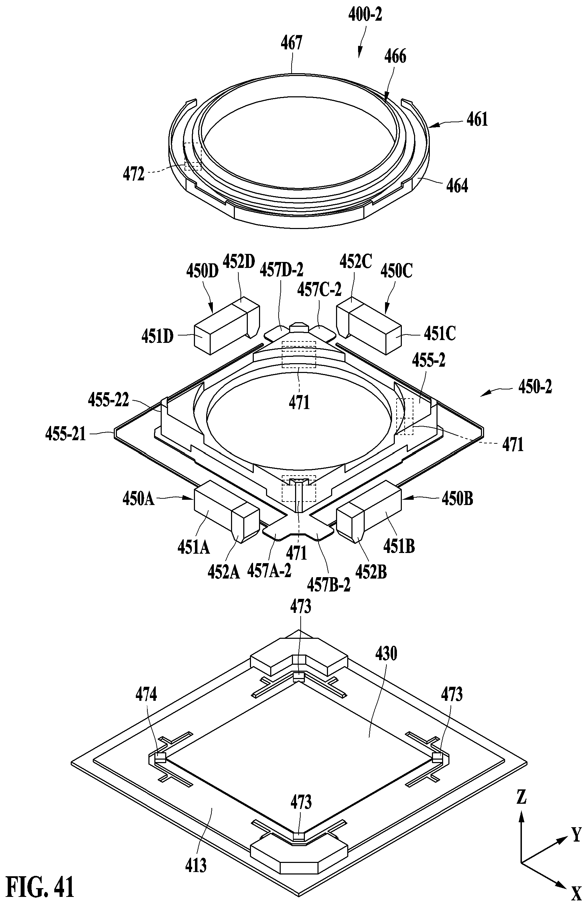

FIG. 39 is a perspective view of a camera module according to an embodiment of the disclosure. FIG. 40 is an exploded perspective view of the camera module according to an embodiment of the disclosure. FIG. 41 is an exploded perspective view illustrating a sensor arrangement structure of the camera module, according to an embodiment of the disclosure.

Referring to FIGS. 39 to 41, a camera module 400-2 (e.g., the camera module 180 of FIG. 1, the camera module 180 of FIG. 2, the second camera module 380B and/or the third camera module 380D of FIGS. 3 and 4, the camera module 400 of FIGS. 5 to 35, and/or the camera module 400-1 of FIGS. 36 to 38) may include the camera housing 410, the lens assembly 420, the image sensor 430, a first piezoelectric actuator 450-2 (e.g., the first piezoelectric actuator 450 of FIGS. 5 to 35 and/or the first piezoelectric actuator 450 of FIGS. 36 to 38), a second piezoelectric actuator 460-2 (e.g., the second piezoelectric actuator 460 of FIGS. 5 to 35 and/or the second piezoelectric actuator 460 of FIGS. 36 to 38), the plurality of first sensors 473, the second sensor 474, the plurality of first sensing magnets 471, and the second sensing magnet 472. The camera housing 410 may include the base 411, the camera cover 412, and the PCB 413. The lens assembly 420 may include at least one lens 421 having the optical axis OA and the lens housing 422. The first piezoelectric actuator 450-2 may include the first resonator 450A including the first vibrator 451A and the first tip 452A, the second resonator 450B including the second vibrator 451B and the second tip 452B, the third resonator 450C including the third vibrator 451C and the third tip 452C, and the fourth resonator 450D including the fourth vibrator 451D and the fourth tip 452D. The second piezoelectric actuator 460-2 may include the fifth resonator 461 and the second moving body 466. The second moving body 466 may include the carrier 467.

The first piezoelectric actuator 450-2 may include a first moving body 455-2 (e.g., the first moving body 455 of FIGS. 5 to 35). The first moving body 455-2 may include a base plate 455-21 and a wall 455-22 disposed on the base plate 455-21. The wall 455-22 may extend in a circumferential direction of the base plate 455-21. The wall 455-22 may support the second moving body 466. The base plate 455-21 and the wall 455-22 may be integrally formed as one component.

The base plate 455-21 may include a first elastically deformable region 457A-2 (e.g., the first elastically deformable region 457A of FIGS. 8 to 10), a second elastically deformable region 457B-2 (e.g., the second elastically deformable region 457B of FIGS. 8 to 10), a third elastically deformable region 457C-2 (e.g., the first elastically deformable region 457A-2 of FIGS. 8 to 10), and a fourth elastically deformable region 457D-2 (e.g., the fourth elastically deformable region 457D of FIGS. 8 to 10).

The first elastically deformable region 457A-2 may be formed as a protruding tab at one edge (e.g., an edge in a -Y direction) that is adjacent to a first corner between two adjacent edges (e.g., an edge in a -Y direction and an edge in a +X direction) of the base plate 455-21. The second elastically deformable region 457B-2 may be formed as a protruding tab at the other edge (e.g., an edge in a +X direction) that is adjacent to the first corner.

The third elastically deformable region 457C-2 may be formed as a protruding tab at one edge (e.g., an edge in a +Y direction) that is between two adjacent edges (e.g., an edge in a +Y direction and an edge in a -X direction) of the base plate 455-21 and is adjacent to a second corner that is opposite to the first corner. The fourth elastically deformable region 457C-2 may be formed as a protruding tab at the other edge (e.g., an edge in a -X direction) that is adjacent to the second corner.

The plurality of first sensing magnets 471 may be disposed on corner regions of the base plate 455-21. The plurality of first sensing magnets 471 may be disposed inside the wall 455-22. The second sensing magnet 472 may be disposed in one surface (e.g., a surface in a -Z direction) of the carrier 467.

One aspect of the disclosure may provide a camera module including a piezoelectric actuator.

The camera module 400 or 400-1 may include the lens 421 having the optical axis OA, the image sensor 430 configured to receive light passing through the lens 421, and the first piezoelectric actuator 450 configured to move the lens 421 or the image sensor 430 in a direction that is substantially orthogonal to the optical axis OA. The first piezoelectric actuator 450 may include the first vibrator 451A configured to generate a vibration, the second vibrator 451B configured to generate a vibration, the first moving body 455 including the first elastically deformable region 457A and the second elastically deformable region 457B, the first tip 452A configured to press the first elastically deformable region 457A and configured to transmit the vibration generated from the first vibrator 451A to the first elastically deformable region 457A, and the second tip 452B configured to press the second elastically deformable region 457B and configured to transmit the vibration generated from the second vibrator 451B to the second elastically deformable region 457B.

At least one vibrator of the first vibrator 451A and the second vibrator 451B may be controlled in a slip-and-stick manner by a difference between the extension vibration speed and the contraction vibration speed thereof.

At least one vibrator of the first vibrator 451A and the second vibrator 451B may be controlled, in one cycle of a driving waveform, so as to have a first section in which the at least one vibrator generates one vibration of an extension vibration and a contraction vibration and a second section in which the at least one vibrator generates the other vibration of the extension vibration and the contraction vibration. The length of the first section may be different from the length of the second section.

At least one vibrator of the first vibrator 451A and the second vibrator 451B may be controlled, in one cycle of a driving waveform, so as to have a first section in which the at least one vibrator generates one vibration of an extension vibration and a contraction vibration and a second section in which the at least one vibrator generates the other vibration of the extension vibration and the contraction vibration. The length of the first section may be substantially the same as the length of the second section.

The first tip 452A may be in contact with the first elastically deformable region 457A. The second tip 452B may be in contact with the second elastically deformable region 457B.

The first tip 452A may include a metallic material. The second tip 452B may include a metallic material.

A first contact region between the first tip 452A and the first elastically deformable region 457A may have a first length that is substantially parallel to a vibration direction of the first vibrator 451A and a first width that is substantially orthogonal to the vibration direction of the first vibrator 451A. A second contact region between the second tip 452B and the second elastically deformable region 457B may have a second length that is substantially parallel to a vibration direction of the second vibrator 451B and a second width that is substantially orthogonal to the vibration direction of the second vibrator 451B. The first width may be greater than the first length. The second width may be greater than the second length. The first width may be substantially greater than or equal to the maximum displacement of the first moving body 455 in the vibration direction of the second vibrator 451B. The second width may be substantially greater than or equal to the maximum displacement of the first moving body 455 in the vibration direction of the first vibrator 451A.

The first width may be substantially greater than or equal to the maximum displacement of the first moving body 455 in the vibration direction of the second vibrator 451B. The second width may be substantially greater than or equal to the maximum displacement of the first moving body 455 in the vibration direction of the first vibrator 451A.

The first vibrator 451A may operate in a d33 mode or a d31 mode. The second vibrator 451B may operate in a d33 mode or a d31 mode.

The first moving body 455 may include the first moving plate 456. The first elastically deformable region 457A and the second elastically deformable region 457B may be bent with respect to the first moving plate 456.

The first vibrator 451A and the first tip 452A may be disposed along a first direction that is substantially orthogonal to the optical axis OA. The second vibrator 451B and the second tip 452B may be disposed along a second direction that is substantially orthogonal to the optical axis and the first direction.

The first vibrator 451A and the first tip 452A may be substantially on the same plane as the second vibrator 451B and the second tip 452B.

The first moving body 455 may include the third elastically deformable region 457C disposed opposite to the first elastically deformable region 457A and the fourth elastically deformable region 457D disposed opposite to the second elastically deformable region 457B. The first piezoelectric actuator 450 may include the third vibrator 451C configured to generate a vibration, the fourth vibrator 451D configured to generate a vibration, the third tip 452C configured to press the third elastically deformable region 457C and configured to transmit the vibration generated from the third vibrator 451C to the third elastically deformable region 457C, and the fourth tip 452D configured to press the fourth elastically deformable region 457D and configured to transmit the vibration generated from the fourth vibrator 451D to the fourth elastically deformable region 457D.

The camera module 400 or 400-1 may include the second piezoelectric actuator 460 configured to move the lens 421 or the image sensor 430 in a direction along the optical axis OA. The second piezoelectric actuator 460 may include additional vibrators 462A and 462B configured to generate a vibration, the second moving body 466, and a second end portion 463B configured to press the second moving body 466 and configured to transmit the vibration generated from the additional vibrator 462A to the second moving body 466.

The second piezoelectric actuator 460 may include the elastic plate 463 including the second end portion 463B. The elastic plate 463 may contact the additional vibrators 462A and 462B.

The second moving body 466 may include the elastic body 467A pressed by the second end portion 463B and the first support 467B configured to support the elastic body 467A and disposed on a first side of the elastic body 467A. The first support 467B may be supported by the first moving body 455.

The second moving body 466 may support the elastic body 467A and may include the second support 467C disposed on a second side of the elastic body 467A, which is opposite to the first side.

The second piezoelectric actuator 460 may include the second moving plate 468 disposed on the second moving body 466.

The camera module 400 or 400-1 may include the reflector 440 configured to reflect light passing through the lens 421 toward the image sensor 430. The reflector 440 may be disposed between the lens 421 and the image sensor 430.

The camera module 400-1 may include the inner cover 414 configured to fix the first vibrator 451A and the second vibrator 451B.

The electronic device 301 may include the camera module 400 or 400-1.

According to an embodiment of the disclosure, a precise linear motion may be generated in a limited space.

According to an embodiment of the disclosure, a structure of a camera module may be simplified, and a piezoelectric actuator and a driving portion may be directly coupled to obtain high driving efficiency and reduce the power required for driving.

According to an embodiment of the disclosure, a vibration generated from the piezoelectric actuator may be uniformly distributed in a target component, thereby maintaining or increasing image resolution.

According to an embodiment of the disclosure, increased resolution may be obtained during focus and magnification adjustments.

According to an embodiment of the disclosure, the size of an actuator may be reduced.

According to an embodiment of the disclosure, the impact of a vibration on the actuator caused by disturbance with a higher frequency than a typical vibration frequency (e.g., hand-shaking frequency) may be reduced, and the disturbance may be actively blocked.

According to an embodiment of the disclosure, image distortion may be reduced or prevented.

According to an embodiment of the disclosure, since a separate guide is not required, the complexity of a module may be reduced and the module may be simplified.

According to an embodiment of the disclosure, a rolling motion of a lens or an image sensor may be implemented only by piezo control.

The effects of the camera module according to embodiments are not limited to those mentioned above, and other effects not mentioned may be clearly understood by those skilled in the art from the description of the disclosure.

The embodiments of the present disclosure are intended to be illustrative and not restrictive. Various modifications may be made to the detailed description of the disclosure including the accompanying scope of claims and equivalents. Any of the embodiment(s) described herein may be used in combination with the embodiment(s) described herein.

## Claims

1. A camera module (400; 400-1) comprising:
a lens (421) having an optical axis (OA);
an image sensor (430) configured to receive light passing through the lens (421); and
a first piezoelectric actuator (450) configured to move the lens (421) or the image sensor (430) in a direction that is substantially orthogonal to the OA,
wherein the first piezoelectric actuator (450) comprises:
a first vibrator (451A) configured to generate a vibration;
a second vibrator (451B) configured to generate a vibration;
a first moving body (455) comprising a first elastically deformable region (457A) and a second elastically deformable region (457B);
a first tip (452A) configured to press the first elastically deformable region (457A) and configured to transmit the vibration generated from the first vibrator (451A) to the first elastically deformable region (457A); and
a second tip (452B) configured to press the second elastically deformable region (457B) and configured to transmit the vibration generated from the second vibrator (451B) to the second elastically deformable region (457B).

2. The camera module of claim 1, wherein at least one vibrator of the first vibrator (451A) and the second vibrator (451B) is controlled in a slip-stick manner by a difference between an extension vibration speed and a contraction vibration speed thereof.

3. The camera module of claim 1 or 2,
wherein at least one vibrator of the first vibrator (451A) and the second vibrator (451B) is controlled, in one cycle of a driving waveform, so as to have a first section in which the at least one vibrator generates one vibration of an extension vibration and a contraction vibration and a second section in which the at least one vibrator generates the other vibration of the extension vibration and the contraction vibration,
wherein a length of the first section is different from a length of the second section.

4. The camera module of one of claims 1 to 3,
wherein at least one vibrator of the first vibrator (451A) and the second vibrator (451B) is controlled, in one cycle of a driving waveform, so as to have a first section in which the at least one vibrator generates one vibration of an extension vibration and a contraction vibration and a second section in which the at least one vibrator generates the other vibration of the extension vibration and the contraction vibration, and
wherein a length of the first section is substantially the same as a length of the second section.

5. The camera module of one of claims 1 to 4,
wherein the first tip (452A) is in contact with the first elastically deformable region (457A), and
wherein the second tip (452B) is in contact with the second elastically deformable region (457B).

6. The camera module of one of claims 1 to 5, wherein the first tip (452A) and the second tip (452B) each comprise a metallic material.

7. The camera module of one of claims 1 to 6,
wherein a first contact region between the first tip (452A) and the first elastically deformable region (457A) has a first length that is substantially parallel to a vibration direction of the first vibrator (451A) and a first width that is substantially orthogonal to the vibration direction of the first vibrator (451A),
wherein a second contact region between the second tip (452B) and the second elastically deformable region (457B) has a second length that is substantially parallel to a vibration direction of the second vibrator (451B) and a second width that is substantially orthogonal to the vibration direction of the second vibrator (451B),
wherein the first width is greater than the first length,
wherein the second width is greater than the second length,
preferably, wherein the first width is substantially greater than or equal to a maximum displacement of the first moving body (455) in a first longitudinal direction, and
wherein the second width is substantially greater than or equal to the maximum displacement of the first moving body (455) in a second longitudinal direction.

8. The camera module of one of claims 1 to 7, wherein the first vibrator (451A) and the second vibrator (451B) operate in a d33 mode or a d31 mode.

9. The camera module of one of claims 1 to 8,
wherein the first moving body (455) further comprises a first moving plate (456), and
wherein the first elastically deformable region (457A) and the second elastically deformable region (457B) are bent with respect to the first moving plate (456).

10. The camera module of one of claims 1 to 9,
wherein the first vibrator (451A) and the first tip (452A) are disposed along a first direction that is substantially orthogonal to the OA, and
wherein the second vibrator (451B) and the second tip (452B) are disposed along a second direction that is substantially orthogonal to the OA and the first direction.

11. The camera module of one of claims 1 to 10, wherein the first vibrator (451A) and the first tip (452A) are substantially on a same plane as the second vibrator (451B) and the second tip (452B).

12. The camera module of one of claims 1 to 11, wherein the first moving body (455) further comprises:
a third elastically deformable region (457C) disposed opposite to the first elastically deformable region (457A); and
a fourth elastically deformable region (457D) disposed opposite to the second elastically deformable region (457B),
wherein the first piezoelectric actuator (450) further comprises:
a third vibrator (451C) configured to generate a vibration;
a fourth vibrator (451D) configured to generate a vibration;
a third tip (452C) configured to press the third elastically deformable region (457C) and configured to transmit the vibration generated from the third vibrator (451C) to the third elastically deformable region (457C); and
a fourth tip (452D) configured to press the fourth elastically deformable region (457D) and configured to transmit the vibration generated from the fourth vibrator (451D) to the fourth elastically deformable region (457D).

13. The camera module of one of claims 1 to 12, further comprising a reflector (440) configured to reflect the light passing through the lens (421) toward the image sensor (430),
wherein the reflector (440) is disposed between the lens (421) and the image sensor (430).

14. The camera module of one of claims 1 to 13, further comprising an inner cover (414) configured to fix the first vibrator (451A) and the second vibrator (451B).

15. An electronic device (101; 301) comprising a camera module (400) according to any one of claims 1 to 14.
